# EUROPÄISCHE PATENTANMELDUNG

(11) **EP 4 830 565 A2**
(43) Veröffentlichungstag der Anmeldung: **28.10.2026**
(21) Anmeldenummer: 26171664.1
(22) Anmeldetag: 10.04.2026
(51) Int. Cl.: A43B 7/1405

(54) **REAKTIONSGESCHÄUMTER SCHUHEINLAGENROHLING MIT 3D GEDRUCKTEM EINLEGETEIL UND VERFAHREN ZU DEREN HERSTELLUNG**

(30) Priorität: 22.04.2025 EP 25171619
(71) Anmelder: Spannrit GmbH, 63801 Kleinostheim (DE)
(72) Erfinder: KATZER, Roland, 63801 Kleinostheim (DE)
(74) Vertreter: Kuhnen & Wacker Patent- und Rechtsanwaltsbüro PartG mbB

(57) **Zusammenfassung**

Orthopädische RIM-PUR-Schuheinlage mit einem fußstützenden Einlegeteil, das mit im Pellet FDM-3D-Druckverfahren erzeugten Extrudatsträngen ausgebildet wurde, die im Einlegeteil in parallelen Schmelzbahnen nebeneinander und/oder in Schichten übereinander angeordnet sind. Die Extrudatstränge bestehen aus einem aufgeschmolzen und aufgeschäumten/expandierten thermoplastischen Kunststoff-Material und weisen eine poröse Oberflächenstruktur auf. Wobei zumindest die Oberseite und die Seitenflächen des Einlegeteils eine rippenartige Wellenstruktur zeigen. Das Einlegeteil wird während eines Ausbildens eines Polsterkörpers der Schuheinlage im RIM-Schäumverfahren von dem in einer RIM-Schäumform reaktiv erzeugtem RIM-PUR-Schaumkunststoff angeschäumt und zumindest formschlüssig an den Polsterkörper angebunden.

## Beschreibung

Die Erfindung betrifft orthopädische Schuheinlagenrohlinge bzw. Schuheinlagen, die mittels reaktionsgeschäumten Polyurethan (PUR) im RIM-Verfahren (Reaktion-Injection-Molding) hergestellt werden. Die Erfindung betrifft weiter mittels eines Einlegeteils individualisierte Schuheinlagen und Schuheinlagenrohlinge, die von einer orthopädischen Fachperson an den Fuß eines Trägers der Schuheinlage weiter patienten-individuell angepasst werden können. Die Erfindung betrifft weiterhin ein Verfahren zur Herstellung solcher mittels Einlegeteilen individualisierte Schuheinlagen bzw. Schuheinlagenrohlinge aus reaktionsgeschäumten Polyurethan (PUR).

Beim RIM-Verfahren wird ein Polyol und ein Isocyanat mittels eines Mischkopfes in eine Schäumform eingebracht, in welcher das mit Isocyanat vermischte Polyol chemisch unter Bildung eines Polyurethanschaumes (PUR) miteinander reagieren können. Bei dieser Reaktion von Polyol mit Isocyanat entsteht unter Anwesenheit von Wasser Kohlendioxid, welches als Treibmittel für das entstehende Polyurethan wirkt und dieses während seiner Entstehung aufschäumt. In Abhängigkeit des eingesetzten Polyols und Isocyanats sowie deren Mischungsverhältnisse können PU-Schäume/ PU-Schaumkunststoffe unterschiedlicher Materialhärten erzeugt werden.

Orthopädische Schuheinlagen, oder auch Einlegesohlen genannt, sind im Stand der Technik hinlänglich bekannt und kommen vielfach bei Fußerkrankungen, Fußfehstellungen, Haltungsschäden oder auch nur zur Unterstützung des Fußes im Alltag zur Anwendung, bspw. zur Unterstützung der physikalischen und biometrischen Gegebenheiten beim Abrollen des Fußes während des Gehens und/oder Laufens. Jedoch gibt es eine große Vielfalt unterschiedlicher Füße, sodass nicht jede Schuheinlage zu jedem Fuß passt. Je besser/individueller eine Schuheinlage an den Fuß eines Trägers angepasst ist oder anpassen kann, desto besser kann diese ihre gesundheitsfördernde Wirkung entfalten. Wurden früher solche Schuheinlagenrohling bzw. Schuheinlagen oft schichtweise aus verschiedenen Lagen und Komponenten aufgebaut und nachträglich an den Patientenfuß angepasst, werden im neueren Stand der Technik Schuheinlagen bzw. deren Rohlinge zunehmend aus geschäumten Werkstoffen in Schäumformen hergestellt, wobei häufig das RIM-Verfahren zum Einsatz kommt, das eine schnellere und integrale Fertigung von Schuheinlagen mit mehreren orthopädischen Funktionsbauteilen in höheren Stückzahlen zulässt. Jedoch benötigt das RIM-Verfahren für jeden einzelnen Schuheinlagenrohling eine separate Schäumform oder Leisten, die/der meist aus Aluminium aufwändig hergestellt werden müssen. Durch verschiedene orthopädische Einlegeteile, wie Fußstützen, Polsterungen, Versteifungen, Pelotten, Fersenkeile, etc. lassen sich solche RIM-geschäumten Schuheinlagen jedoch in einem gewissen Umfang individuell konfigurieren, gegebenenfalls auch patientenindividuell. Eine finale Anpassung an einen Patientenfuß kann jedoch nachträglich durch eine orthopädisch ausgebildete Fachkraft erfolgen.

Mit dem RIM-Verfahren unter Verwendung von unterschiedlichen Einlegeteilen stehen viele Möglichkeiten zur Verfügung, wie Schuheinlagen bzw. Schuheinlagenrohlinge in einer hohen Variantenvielfalt entsprechend allgemeinen und speziellen Krankheitsbildern, Patienten-und/oder Fußvorgaben (vor-)individualisiert in größeren Stückzahlen wirtschaftlich hergestellt werden können. Eine Erhöhung der Vielfalt der Schäumformen ist im Allgemeinen jedoch kostspielig.

Mit der Einführung der FDM (Fused Deposition Modeling)-3D-Drucktechnologie wurde dem Fachmann eine weitere Technologie an die Hand gegeben, mit der patienten-individuelle Sohlen oder Teile davon anhand von patienten-individuellen 3D-Daten erzeugbar sind. Das FDM-3D-Druckverfahren ist ein additives Herstellverfahren und im Wesentlichen dadurch gekennzeichnet, dass mittels einer Fördereinrichtung ein Werkstoff in Form eines Filaments zu und durch eine beheizte Düse geführt wird, dort aufgeschmolzen und auf eine Unterlage bzw. eine bereits vorher aufgetragene Schicht oder einen vorher aufgetragenes Filament ablegt wird. Nach dem Ablegen und Abkühlen erstarrt der Werkstoff wieder. Beim Ablegen eines noch geschmolzenen Filaments auf einen bereits vorher abgelegten Filamentstrang findet durch den Wärmeeintrag des geschmolzenen Filaments auf einen bereits vorhandenen darunterliegenden Filamentstrang ein geringfügiges erneutes Anschmelzen des darunterliegenden Filamentstrangs statt, sodass sich aufeinandergelegte Filamentstränge auch stoffschlüssig miteinander verbinden können. Durch mehrmaliges ggfs. mäanderartiges Aufeinanderlegen von Filamentsträngen werden schichtweise dreidimensionale Körper erstellt. Übliche Werkstoffe für ein solches FDM-3D-Druckverfahren mit aufgeschmolzenen Filamenten sind insbesondere thermoplastische Kunststoffe, wie zum Beispiel PLA, ABS, ASA, PA, PC, PP, PE, PS aber auch thermoplastische Elastomere, wie zum Beispiel TPU.

Beispielsweise beschreibt DE 10 2019 213 384 A1 eine additiv fertigende Werkzeugmaschine, zur Verarbeitung von Kunststoff, umfassend einen Extruder zur additiven Fertigung und eine Handhabungseinrichtung, insbesondere einen Sechs-Achs-Roboter, zum Bewegen des Extruders.

Weiter beispielsweise beschreibt US 2019/0 134 972 A1 eine Herstellung von individualisierten Schuhteilen aus thermoplastischen Kunststoffen mittels eines Filament-FDM-3D-Druckverfahrens, wobei ein FDM-3D-Drucker über einen Mechanismus zur Bewegung eines Extruders in drei Dimensionen relativ zu einer Arbeitsfläche 12 verfügt. Ein Schlitten ermöglicht dem Extruder, entlang einer X-Achse parallel zur Arbeitsfläche von links nach rechts zu gleiten, wobei entweder der Schlitten oder die Arbeitsfläche sich in einer senkrechten Y-Achse von vorne nach hinten bewegen können. Die Höhe des Extruders (Z-Achse) kann mit Hilfe von Schrauben und Motoren eingestellt werden.

Mit diesen bekannten FDM-3D-Druckverfahren ist es ohne weiteres möglich, komplizierte räumliche Geometrien, Hohlkörper oder überkragende Bauteile gegebenenfalls unter Zuhilfenahme von Stützstrukturen herzustellen. Auch können fein verästelte Strukturen gedruckt werden, wodurch eine gewichtsreduzierte Ausbildung des zu druckenden Körpers/Bauteils möglich ist. Selbst bei fein strukturierten verästelten Bauteilkonstruktionen ist jedoch bei den bekannten FDM-3D-Druckverfahren jeder Ast bzw. jeder gedruckte Filamentstrang für sich betrachtet aus einem Vollmaterial gebildet.

Solche herkömmlich mit massiven, Vollmaterial-Kunststofffilamenten gedruckten Schuheinlagenrohlinge, Schuheinlagen oder Komponenten/Bauteile davon, sind allerdings nicht ohne anschließende Nacharbeit als Schuheinlage oder Bauteil hierfür verwendbar, da sie entweder zu hart, zu brüchig, nicht formstabil, zu schwer oder einfach nicht robust genug sind, um einer dauerhaften dynamischen Belastung, wie eine solche beim Gehen oder Laufen auftritt, beschädigungsfrei standzuhalten. Daher werden/müssen solche aus Filamenten 3D-gedruckten Komponenten aufwendig nachbearbeitet/ergänzt werden, bevor sie als Schuheinlage oder Teil einer Schuheinlage Verwendung finden können. Insbesondere bei der Versteifung, Polsterung oder beim Beziehen der 3D-gedruckten Schuheinlagen / Komponenten treten Probleme hinsichtlich der Haftung/Verklebung der einzelnen Bauteile miteinander auf.

Aufgabe der vorliegenden Erfindung ist es daher Schuheinlagenrohlinge, Schuheinlagen und/oder Komponenten hiervon bereitzustellen, die die Verwendung von 3D-gedruckten Einlegeteilen, speziell von patienten-individuell gedruckten Einlegeteilen bei der Herstellung von Schuheinlagen bzw. Schuheinlagenrohling mittels des RIM-Verfahrens zuverlässig ermöglichen, um so den Individualisierungsgrad bzw. die Vielfalt von Schuheinlage bzw. Schuheinlagenrohlingen, die mit einer einzelnen RIM-Schäumform hergestellt werden kann, zu erhöhen.

Im weiteren Verlauf der Erfindungsbeschreibung wird zur Verbesserung der Lesbarkeit der Begriff "Schuheinlage" auch stellvertretend für "Schuheinlagenrohlinge" verwendet, die insbesondere am Ende des erfindungsgemäßen Herstellverfahren vorliegen und anschließend gegebenenfalls durch einen Orthopädie-Meister oder Techniker weiter an einen Fuß und/oder Schuh eines Trägers bzw. Patienten anpassbar sind, z.B. durch Schleifen der Unterseite oder Bearbeiten der Oberseite.

Ziel ist es, aus einem 3D-Datenmodell, zum Beispiel aus einem patientenindividuellen Fußabdruckes oder einem Fuß(sohlen)-Scan, ein leichtes, biegsames, elastisches und doch stützendes und tragendes, orthopädisch wirksames Bauteil, bereitzustellen, das einfach und zuverlässig als Einlegeteil im RIM-Schäumverfahren zum Herstellen von Schuheinlagen verwendet werden kann und dessen Anbindung an einen reaktionsgeschäumten Polyurethanschaum (PUR-Schaum) den insbesondere dynamischen Alltagsbelastungen, denen eine Schuheinlage ausgesetzt ist, dauerhaft standhält. Dabei soll ein solches erfindungsgemäß hergstelltes orthopädisch wirksames Bauteil/Einlegeteil ohne hohen, am besten ohne jeglichen Nacharbeitungsaufwand zur Herstellung von Schuheinlagenrohlingen im RIM-Verfahren einsetzbar sein.

Des Weiteren soll ein Verfahren angegeben werden, welches unabhängig von gängigen, handelsüblichen Durchmessern für Werkstoff-Filamente für FFF-3D-Druckverfahren durchführbar ist.

Hinsichtlich des zu schaffenden Einlegeteils hat sich die Erfindung die Aufgabe gestellt, das Einlegeteil im Pellet-FDM-3D-Druckverfahren herstellen zu können, welches die oben erwähnten Anforderungen an orthopädische Wirksamkeit, Stabilität, geringem Gewicht, Biegsamkeit und Elastizität erfüllt.

Ferner ist es Aufgabe der Erfindung eine orthopädische Schuheinlage anzugeben, welche das erfindungsgemäße Einlegeteil, als orthopädisch wirksames Bauteil nutzt. Darüber hinaus soll auch eine geeignete Kunststoffmaterialmischung zum Herstellen des orthopädisch wirksamen Bauteils zur Verwendung in einer reaktionsgeschäumten Schuheinlage angegeben werden.

Die erfindungsgemäßen Aufgaben werden mit einer Schuheinlage bzw. einem Schuheinlagenrohling gemäß Anspruch 1 gelöst, wobei bevorzugte Ausführungsformen in den von Anspruch 1 direkt oder indirekt abhängigen Ansprüchen angegeben sind. Die Aufgaben der Erfindung werden auch durch ein Verfahren zur Herstellung eines orthopädisch wirksamen Einlegeteils für solche Schuheinlagen bzw. Schuheinlagenrohlinge gemäß Anspruch 14 gelöst, dessen bevorzugte Ausführungsformen in den von Anspruch 14 direkt oder indirekt abhängigen Ansprüchen angegeben sind. Die erfindungsgemäßen Aufgaben werden weiter durch ein Verfahren gelöst, welches mit dem gemäß Anspruch 14 und/oder dessen Ausführungsformen hergestellten Einlegeteil eine Schuheinlage ausbildet.

Die Aufgaben hinsichtlich des 3D-gedruckten Einlegeteils für eine orthopädische Schuheinlage aus PUR-Schaumstoff werden erfindungsgemäß mit einem verbesserten Pellet-FDM-3D-Druckverfahren gelöst, welches das Einlegeteil für eine orthopädische Schuheinlage aus einem aufgeschmolzen aufgeschäumten thermoplastischen Kunststoff-Material mittels eines Pellet-FDM-3D-Druckverfahren erstellt. Das erfindungsgemäße Verfahren zum FDM-3D-Drucken mit aufgeschmolzen aufgeschäumten Kunststoff-Material weist zumindest die nachfolgenden Schritte auf:
- physikalisches Mischen von Granulatkörner eines thermoplastischen Kunststoff-Materials mit einem Treibmittel zum Erzeugen einer Materialmischung;
- Bereitstellen der Materialmischung in einem trichterförmigen Vorratsbehälter eines Pellet-FDM-3D-Druckers;
- Fördern der Materialmischung aus dem Vorratsbehälter zu einer Austrittsdüse des Pellet-FDM-3D-Druckers mittels einer Fördereinrichtung;
- Erhitzen der Materialmischung, gegebenenfalls bereits teilweise während des Förderns, bis über eine Schmelztemperatur des Kunststoffmaterials;
- Durchdrücken der Materialmischung durch die Austrittsdüse zum Erzeugen eines aus der Materialmischung entstehenden aufgeschmolzenen und aufgeschäumten/expandierten, faden- oder bandförmigen Extrudatstranges mit poröser Oberfläche;
- wiederholtes paralleles und schichtbildendes Auftragen und/oder Ablegen des Extrudatstranges aus aufgeschmolzen aufgeschäumten/expandierten Kunststoff in Schwerkraftrichtung mittels einer Materialauftragvorrichtung auf ein getaktet angetriebenes Förderband, zum Beispiel ein Endlosförderband, und/oder auf einen bereits auf dem Förderband befindlichen, aufgetragenen Extrudatstrang, diesen, in Schwerkraftrichtung gesehen, wenigstens teilweise überlappend, zum schrittweisen Ausbilden des Einlegeteils.

Im weiteren Verlauf der Beschreibung wird der Term Extrudatstrang für den die Austrittsdüse expandierend verlassenden, mäanderförmig abgelegten Extrudatstrang auch in der Mehrzahl verwendet, um die einzelnen Abschnitte der mäanderförmigen Ablage semantisch illustrativer darzustellen, da insbesondere auch eine zeilen-weise schichtbildende Ablage von Extrudatsträngen vom Erfindungsgedanken umfasst sein soll, also auch eine nicht mäanderförmige, im wesentlichen parallele Ablage von vereinzelten expandierten Extrudatsträngen.

Erfindungsgemäß wurde erkannt, dass ein aufschäumbares/expandierbares Kunststoff-material in Form eines Filaments, welches das übliche FFF-FDM-3D-Druckverfahren nutzt, nicht existiert bzw. auf dem Markt nicht zur Verfügung steht. Ein Kunststoffmaterial als aufschäumbares/expandierbares Filament zum Beschicken eines Filament-FDM-3D-Druckers bereitzustellen oder zu erwerben, ist zumindest derzeit nicht möglich.

In Abwandlung des gängigen, herkömmlich verwendeten FFF-FDM-3D-Druckverfahrens mit Filamenten arbeitet das erfindungsgemäße Pellet-FDM-3D-Druckverfahren somit mit einem Werkstoff, welcher nicht als Filament bevorratet wird. Vielmehr verwendet die Erfindung ein thermoplastisches Kunststoff-Material, welches in Form eines Granulates vorliegt, welches aus einer Vielzahl von Granulatkörnern besteht. Unter Granulatkörner sind erfindungsgemäß kleinteilige Stückchen des thermoplastischen Kunststoff-Materials zu verstehen, welche im Gegensatz zu einem Filament keinen lang gestreckten zylindrischen oder anderweitig querschnittsgeformten Körper bilden. Die Granulatkörner bilden ein Schüttgut und können zum Beispiel quaderförmig, kugelförmig, zylinderförmig oder unregelmäßig geformt sein. In Abgrenzung zum Filamentbasierten FFF-FDM-3D-Druckverfahren wird das mit Granulat arbeitenden FDM-3D-Druckverfahren als Pellet-3D- Druckverfahren bezeichnet.

Insbesondere nutzt das erfindungsgemäße Verfahren ein Treibmittel zum Aufschäumen/Expandieren des eingesetzten Kunststoffs beim Verlassen des Pellet-3D-Druckers zum Erstellen eines 3D-gedruckten Einlegeteils, z.B. eines orthopädisch wirksamen Bauteils, für die Herstellung eines Schuheinlagenrohlings bzw. einer Schuheinlage mit dem RIM-Schäumverfahren. Dabei weist das Treibmittel eine Aktivierungstemperatur auf, ab der aus dem Treibmittel gasförmige Produkte entstehen, die, wenn sie sich in einer Kunststoffschmelze befinden, zu einem Aufschäumen/Expandieren der Kunststoffschmelze führen. Derartige Treibmittel sind auch als Schaumbildner bekannt. Solche Treibmittel liegen beispielsweise in Pulverform vor. Erfindungsgemäß liegt die Aktivierungstemperatur des Treibmittels unter der Schmelztemperatur des verwendeten Kunststoffs.

Die Erfindung sieht vor, einem an sich bekannten Pellet-FDM-3D-Drucker einen durch Wärme aufschäumbaren/expandierenden Kunststoff bereitzustellen. Dies gelingt durch die Bereitstellung des oben erwähnten Kunststoffgranulats, welches mit einem geeigneten, z.B. pulver-förmigen, pastösen oder flüssigen Treibmittel physikalisch vermischt bzw. vernetzt wird, sodass eine Materialmischung aus Granulatkörnern des Kunststoffgranulats und dem Treibmittel entsteht, welches nach Aktivierung des Treibmittels geeignet ist, die Kunststoffschmelze zu expandieren/aufschäumen zu können. Je nach eingesetzten Kunststoff und der Form und Oberflächenbeschaffenheit der Granulatkörner können haftvermittelnde Additive der Materialmischung zugegeben werden, die die Anhaftung von Treibmittel an die Granulatkörner begünstigen, sodass das Treibmittel besser mit den Granulatkörnern vermengt werden kann und eine homogenere Materialmischung erreicht wird. Hierzu können die Granulatkörner mit Wasser, Öl, Harz und/oder Klebstoff benetzt werden. Die Additive können vor oder während der Zugabe des Mischen des Treibmittels mit dem Kunststoffgranulat hinzugefügt werden, damit die Granulatkörner mit Treibmittel "ummantelt" werden.

Damit wird beispielsweise erreicht, dass das Treibmittel an der/den Außenflächen der Granulatkörner qualitativ und/oder quantitativ besser anhaftet und derart verteilt ist, dass es in ausreichendem Maße während des Erwärmens der Materialmischung vorhanden ist. Da das Treibmittel seine Aktivierungstemperatur erreichen soll, bevor das Kunststoff-Material seine Schmelztemperatur erreicht, wird weiter damit auch erreicht, dass das Kunststoffmaterial, sobald dieses seine Schmelztemperatur überschritten hat, durch das Treibmittel aufgeschäumt/expandiert werden kann. Bevorzugt ist die Aktivierungstemperatur des Treibmittels somit niedriger als die Schmelztemperatur des Kunststoffmaterials, so dass bereits vor dem Erreichen der Schmelztemperatur des Kunststoffmaterials das Treibmittel gasförmig vorliegt, womit das gasförmig vorliegende Treibmittel das Kunststoffmaterial unmittelbar nach Erreichen seiner Schmelztemperatur aufschäumen/expandieren kann.

Die Materialmischung aus Kunststoff-Granulat und daran anhaftenden, nicht aktiviertem Treibmittel wird im nächsten Schritt einem geeigneten, zum Beispiel trichterförmigen Vorratsbehälter eines Pellet-FDM-3D-Druckers zugeführt. Von diesem Vorratsbehälter wird die bereitgestellte Materialmischung weiter einer Austrittsdüse eines Druckkopfes des Pellet-FDM-Druckers mittels einer Fördereinrichtung zugeführt. Dies kann beispielsweise mit einem geeignet beheizbaren Schneckenförderer erfolgen, wobei die Materialmischung längs ihres Förderweges kontinuierlich erhitzt wird, bis spätestens an der Austrittsdüse die Schmelztemperatur des Kunststoff-Materials erreicht ist. Innerhalb der Fördereinrichtung des Pellet-FDM-3D-Druckers, zum Beispiel innerhalb eines Schneckenförderers, wird somit sowohl das Treibmittel thermisch aktiviert als auch das Kunststoffgranulat aufgeschmolzen, wodurch bereits im Bereich der Austrittsdüse ein Aufschäumen des Kunststoffes zumindest initiiert wird. Das Aufschäumen der Kunststoffschmelze setzt sich beim Austritt der Kunststoff-Treibmittelschmelze aus der Austrittsdüse in die Umgebung fort, da bei diesem Übergang des Materialstroms von einem Bereich mit Überdruck innerhalb der Fördereinrichtung (aufgrund des bereits aktivierten Treibmittels) in einem Bereich mit Umgebungsdruck außerhalb der Austrittsdüse das Treibgas, welches aus dem Treibmittel entstanden ist, die aufgeschmolzene Kunststoff-Teibmittelschmelze expandieren kann und somit am Ausgang der Austrittsdüse ein aufgeschäumter, faden- oder bandförmiger, expandierter Extrudatstrang aus aufgeschäumten Kunststoffmaterial der ursprünglich eingesetzten Materialmischung vorliegt.

Aufgrund des Druckabfalls nach Verlassen der Austrittsdüse kann die Kunststoff-Teibmittelschmelze expandieren, wodurch das Volumen der Kunststoff-Teibmittelschmelze zunimmt und ein expandierter Extrudatstrang gebildet wird, der einen größeren Querschnitt aufweist als die Austrittsdüse, durch welche die plastifizierte Kunststoff-Teibmittelschmelze mittels der Fördereinrichtung hindurchgedrückt wurde. Durch die im Wesentlichen freie und ungehinderte Expansion der plastifizierten Kunststoff-Teibmittelschmelze bildet sich an der Außenseite des Extrudatstranges eine poröse Oberfläche aus, da sich der bildende Schaumkunststoff aufgrund der freien Expansion offenporig ausbilden kann.

Damit ein unbeabsichtigtes Entweichen des gasförmigen Treibmittels aus der Fördereinrichtung vor dem Erreichen der Schmelztemperatur des Kunststoff-Materials verhindert wird, können geeignete fachübliche Maßnahmen ergriffen werden, wie zum Beispiel die Verwendung einer Plastifizierschnecke bzw. eines Plastifizierextruders, ähnlichen solchen, die aus dem Kunststoff-Spritzguss- oder Kunststoff-Extrudierprozess bekannt sind und die eine interne oder externe Heizung zum Erwärmen des zu fördernden und aufzuschmelzenden Materials aufweisen. Üblicherweise weisen solche Plastifizierer eine gute Abdichtung der Förderschnecke gegenüber dem Förderrohr auf, sodass ein entstehender Überdruck in der Fördereinrichtung verbleibt und am Ende der Förderstrecke nutzbringend eingesetzt werden kann.

Bei der vorliegenden Erfindung wird das Treibmittel thermisch aktiviert, bevor die Granulatkörner des Kunststoffmaterials schmelzen. Dabei geht das Treibmittel in den gasförmigen Zustand über und bildet in der Fördereinrichtung / im Förderrohr einen Überdruck, der dazu verwendet werden kann, dass die Materialmischung weiter transportiert bzw. zumindest ihr Weitertransport unterstützt wird, sodass die plastifizierte Materialmischung am Förderende durch eine Austrittsdüse hindurchgedrückt wird, wo sie nach Verlassen der Austrittsdüse expandiert und aufschäumt, da dort Umgebungsdruck vorherrscht.

In einem Ausführungsbeispiel der Erfindung kann es bevorzugt sein, einen Schneckenförderer oder eine Plastifizierschnecke der Fördereinrichtung in etwa vertikal auszurichten, wobei der Ausgang der aufgeschmolzenen, plastifizierten Materialmischung, die Austrittsdüse, am unteren Ende angeordnet ist. Damit befindet sich der Födereinlass der Fördereinrichtung folgerichtig am oberen Ende. Hier lässt sich eine verbesserte Abdichtung der Schneckengänge gegenüber dem Förderrohr dadurch erzielen, da das noch nicht, oder nicht vollständig aufgeschmolzene Kunststoffgranulat, das teilweise in breiigem Zustand vorliegt, aufgrund der Schwerkraft des darüberliegenden Materials hilft, die Schneckenwindungen zum Förderrohr hin abzudichten. So wird eine Art selbsthemmende Abdichtung zwischen der Innenwand des Förderrohrs und den Außenflächen der Förderschnecke bereitstellt und verhindert, dass der entstehende Druck in der Fördereinrichtung in Richtung des Einlass der Fördereinrichtung entweicht. Dies macht ggfs. zusätzliche Abdichtmaßnahmen zur Vermeidung, dass gasförmiges Treibmittel aus dem Extruder in Richtung Eingang der Fördereinrichtung entweicht, überflüssig. Damit kann mit einer vertikalen oder in etwa vertikalen Ausrichtung der Fördereinrichtung eine Art Selbstabdichtungseffekt erzielt werden, welcher bei einer horizontalen Ausrichtung der Förderschnecke der Fördereinrichtung nur in einem geringeren Maße auftritt. Gegebenenfalls können so zusätzliche Maßnahmen zum Erreichen einer verbesserten Gasdichtigkeit der Fördereinrichtung in Richtung des Einlass der Fördereinrichtung vermieden werden.

Eine so plastifizierte, aufgeschmolzene bzw. angeschmolzene und gegebenenfalls bereits teilweise aufgeschäumte Kunststoff-Treibmittel-Mischung wird gemäß des erfindungsgemäßen Verfahrens durch die Austrittsdüse, zum Beispiel durch einen beheizten Düsenkanal der gegebenenfalls beheizten Austrittsdüse hindurchgedrückt, sodass sich am Ende des beheizten Düsenkanals der Austrittsdüse ein strangförmiger, zum Beispiel faden- oder bandförmiger Werkstoff- bzw. Extrudatstrang aus geschmolzenem und wenigstens teilweise aufgeschäumtem/expandierten Kunststoffmaterial bildet. Die Querschnittsform des Werkstoffstranges - im folgenden Extrudatstrang oder auch Extrudatstränge genannt - ist dabei grundsätzlich beliebig wählbar. In einfachster Form stellt die Düse einen im Querschnitt näherungsweise kreisförmigen Extrudatstrang bereit. Der Vorschub des Extrudatstranges durch die Austrittsdüse wird durch den Extruder selbst, dem Überdruck im Extruder, durch die Expansion am Düsenausgang und/oder die Schwerkraft bewirkt, bzw. kann durch Beeinflussung von Extruderparametern, wie Durchmesser, Schneckensteigung, Drehzahl, Temperaturprofil, etc. geeignet eingestellt werden, sodass ein die Austrittsdüse verlassender, expandierender, weicher und warmer Extrudatstrang sich mit einem bereits abgelegten, expandierten Extrudatstrang form- und/oder stoffschlüssig, in Art einer Schmelz- oder Schweißverbindung, verbinden kann. Dabei begünstigen die porösen Oberflächen in den Kontaktzonen der beiden Extrudatstränge eine stoff- und/oder formschlüssige Verbindung. Durch die Ablage der warmen und noch weichen Extrudatstränge an-, neben-und/oder übereinander entsteht eine rippenartige Wellenstruktur an den Außenflächen des Einlegeteils, wobei die einzelnen Extrudatstränge, insbesondere in der Kontaktbereichen, leicht deformiert werden.

Die so aufgeschmolzenen und aufgeschäumten/expandierten Extrudatstränge werden, wie auch aus herkömmlichen FDM-3D-Druckverfahren bekannt, entweder auf eine Unterlage, welche das entstehende Bauteil während des 3D-Druckes trägt, oder auf einen bereits in einem früheren Durchgang abgelegten, bereits expandierten Extrudatstrang, diesen wenigstens teilweise überlappend, abgelegt. Die Unterlage, welche bei üblichen FDM-3D-Druckverfahren oftmals eine starre Platte ist, ist erfindungsgemäß abgewandelt und durch ein getaktet antreibbares Förderband, zum Beispiel ein Endlosförderband ersetzt. Die Fördererrichtung des Förderbandes kann dabei einer der Raumachsen (X-Achse, Y-Achse, Z-Achse) entsprechen und bildet insbesondere die X-Achse, z.B. die Längsrichtung des herzustellenden Bauteils/Einlegeteils, welche der Längsrichtung der Schuheinlage entspricht. Eine Größe des Taktschrittes des getakteten Förderbandes ist dabei in der Regel etwas kleiner als eine Dicke eines aufzutragenden, neuen, expandierten Extrudatstranges neben und/oder auf einen bereits existierenden Extrudatstrang, damit ein Kontakt des frisch abgelegten warmen Extrudatstranges mit dem zuvor abgelegten, in Regel ebenfalls noch warmen Extrudatstrang gewährleistet ist. Bevorzugt kann auch eine minimale laterale Überlappung bei der Ablage stattfinden, womit die form- und/oder stoffschlüssige Verbindung/Verschmelzung der warmen und weichen Extrudatstränge unterstützt werden kann.

Der Druckkopf, welcher die Austrittsdüse trägt, führt in bekannter Art und Weise Positionierbewegungen in den anderen beiden Raumrichtungen, z.B. in der Y- und Z- Richtung aus, d.h. in Sohlenquer- und Sohlendickenrichtung. Der Druckkopf bildet somit eine Materialauftragsvorrichtung für das strangförmig die Austrittsdüse verlassende, aufgeschmolzene, aufschäumende und expandierende Kunststoffmaterial.

In einer anderen, ebenfalls bevorzugten Ausführungsform des erfindungsgemäßen Herstellverfahrens für 3D-gedruckte Einlegeteile ist das Förderband, zum Beispiel ein Endlosförderband gegenüber der Horizontalen geneigt, sodass die expandierenden Extrudatstränge, die weiterhin in Schwerkraftrichtung abgelegt werden und insbesondere teilweise den zuvor abgelegten Extrudatstrang oder dessen Windung zumindest teilweise überlappen, in den sich bildenden Schichten der Extrudatstränge bzw. Windungen des Extrudatstranges in der bestimmungsgemäßen Ausrichtung des Einlegeteils in der Schuheinlage als schräg zur Horizontalen bzw. Vertikalen verlaufend erkennbar sind. Die bestimmungsgemäße Ausrichtung einer Schuheinlage und damit des Einlegeteils in einem Schuh ist üblicherweise im Wesentlichen horizontal. Dies bestimmt somit auch die Einbaulage des Einlegeteils, an dem die schräggestellten Schichten gegenüber der Horizontalen und Vertikalen jederzeit deutlich erkennbar sind. Oftmals bildet eine Unterseite des Einlegeteils auch die Unterseite einer Schuheinlage, welche üblicherweise eine im Wesentlichen horizontale Ausrichtung zeigt.

Durch eine geneigte Anordnung des Förderbandes gegenüber der Horizontalen wird erreicht, dass ein in Schwerkraftrichtung auf die Unterlage auftreffender, expandierter und warmer Extrudatstrang - hier auf das Förderband oder ein auf einem auf dem geneigten Förderband bereits vorhandener, früher abgelegter Extrudatstrang - einerseits auf dem Förderband und/oder andererseits auf dem bereits vorhandenen, darunterliegenden Extrudatstrang besseren Halt findet. Auch das Verschmelzen der Extrudatstränge untereinander wird dadurch begünstigt, da ein Verschmelzen eines frisch abgelegten Extrudatstranges mit einem in Schwerkraftrichtung darunterliegenden Extrudatstrang als auch mit einem in Förderrichtung davor liegenden Extrudatstrang erfolgen kann. Somit erhöht die Schrägstellung der Fördereinrichtung die Festigkeit der stoffschlüssigen Verbindung der Extrudatstränge untereinander, was letztendlich auch an der Festigkeit des fertigen Bauteils erkennbar ist. Ein Auseinanderbrechen oder gar Auseinanderfallen an benachbarten Extrudatsträngen des erfindungsgemäß 3D-gedruckten Einlegeteils wird so erschwert bzw. verhindert.

Zudem ermöglicht das getaktet angetriebene Förderband das Einlegeteil-Herstellverfahren kontinuierlich durchzuführen, da das entstehende Einlegeteil in Fördererrichtung des Förderbandes quer, relativ zur Druckkopf-Bewegung des 3D Druckers bewegt wird und nach Fertigstellung eines Bauteils aus dem Arbeitsbereich des Druckkopfes des 3D Druckers, z.B. nach vorne bzw. nach vorne-unten wegbewegt wird. Der Druckkopf kann sofort nach Fertigstellung eines Bauteils/Einlegeteils an einer freien Stelle des Förderbandes mit dem Druck des nächsten Bauteiles beginnen, ohne dass zunächst das gerade fertig gestellte Bauteil vom Förderband entfernt werden muss.

Ein weiterer positiver Effekt bei Schrägstellung des Förderbandes ist, dass insbesondere bei der Herstellung von dünnwandigen Bauteilen ein vergrößerter Überlappungsbereich einer Schicht von Extrudatsträngen gegenüber der vorausgegangenen Schicht von Extrudatsträngen erzielt wird, und somit eine festere und mechanische stärker beanspruchbare Verbindung zwischen den Schichten entsteht.

Als Schrägstellung des Förderband gegenüber der Horizontalen hat sich ein Winkel von 30° bis 70°, insbesondere ein Winkel im Bereich von 40° bis 60° bewährt.

Unabhängig davon, ob das Förderband horizontal oder geneigt zur Horizontalen ausgerichtet ist, bildet sich durch die Ablage der noch weichen und warmen Extrudatstränge, die bereits zumindest teilweise expandiert sind, eine im Wesentlichen flache Unterseite des Einlegeteils aus. Dabei zeigt die Unterseite, verstärkt jedoch die Oberseite und die Seitenflächen des Einlegeteils eine rippenartige Wellenstruktur, die daraus resultiert, dass die die Austrittsdüse verlassenden, expandierenden, warmen und weichen Extrudatstränge nebeneinander und/oder schichtweise übereinander auf das Förderband bzw. auf bereits dort abgelegte Extrudatstränge abgelegt werden. In diesem noch weichen und ggfs. noch nicht vollständig expandierten Zustand können sich die frisch abgelegten Extrudatstränge in parallelen Schmelzbahnen mit den bereits abgelegte Extrudatstränge verbinden, was je nach Dicke/Durchmesser/Querschnittsgröße eine rippenartige Wellenstruktur formt.

An der fertigen Schuheinlage bzw. Schuheinlagenrohling ist diese rippenartige Wellenstruktur zumindest an den Seitenflächen des Einlegeteil gut erkennbar. Aufgrund der Schwerkraft werden die Extrudatstränge, die die Unterseite des Einlegeteil bilden teilweise flach gedrückt, sodass hier zumindest eine Linienstruktur erkennbar ist, jedoch die Wellenberge und Wellentäler weniger stark ausgebildet sind.

Diese rippenartige Wellenstruktur auf den Außenseiten des Einlegeteil begünstigt zusammen mit der porösen Oberfläche der einzelnen, expandierten Extrudatstränge die form-und/oder stoffschlüssige An- und Verbindbarkeit eines im RIM-Verfahren an das Einlegeteil anschäumbaren Polsterkörpers zur Vervollständigung der Schuheinlage bzw. des Schuheinlagenrohlings, ohne dass hierbei weitere Haftvermittler oder dergleichen eingesetzt werden müssen. Dabei ist die Verbindungsstärke eines an das erfindungsgemäß erstellte Einlegeteil so hoch, dass es den alltäglichen Belastungen, die auf eine Schuheinlage wirken, standhalten kann.

Wird darüber hinaus mit dem erfindungsgemäßen Pellet-3D-Druckverfahren ein Einlegeteil aus einem aufgeschäumten, thermoplastischen Kunststoff-Material erstellt, das mit dem im RIM-Schäumverfahren erzeugten PUR-Schaumkunststoff verwandt ist, so findet eine verbesserte, innige stoffschlüssige Verbindung zwischen Einlegeteil und Polsterkörper statt, die mit einem Verschmelzen zumindest vergleichbar ist. Aber auch hier unterstützt die raue, poröse Oberflächenstruktur der einzelnen Extrudatstränge sowie die rippenartige Wellenstruktur auf der vom RIM-Schaumkunststoff angeschäumten Oberseite des Einlegeteils eine feste Verbindung der beiden Teile - des Einlegeteils und des Polsterkörpers.

In einer weiteren, bevorzugten Ausführungsform des erfindungsgemäßen Verfahrens werden die Oberflächen der Granulatkörner des thermoplastischen Kunststoff-Materials mechanisch aufgeraut, bevor diese mit dem zum Beispiel pulverförmigen Treibmittel vermischt werden.

Mit dieser Maßnahme gelingt es, ein verbessertes Anhaften des Treibmittels an den Oberflächen der Kunststoff-Granulatkörner sicherzustellen und/oder eine gleichmäßigere Vermischung zwischen den Granulatkörnern und dem Treibmittel zu erreichen, wobei das Treibmittel stabiler bis zu Weiterverarbeitung/Erwärmung der Materialmischung an den Kunststoff-Granulatkörnern anhaften bleibt. Hierdurch wird sichergestellt, dass das Treibmittel nicht nur besser an den Oberflächen der Granulatkörnern anhaften bleibt, bis die Materialmischung zum Zwecke des Aufschäumens erhitzt wird, sondern auch, dass größere Mengen eines beispielsweise pulverförmigen Treibmittels an den einzelnen Granulatkörner anhaftet.

Erfindungsgemäß sind jedoch auch weitere mögliche Maßnahmen denkbar, die die quantitative und/oder qualitative Anhaftung des Treibmittels an den Körnern des Kunststoffgranulats verbessern, wie statische Aufladung der Granulatkörner, Anfeuchten des Granulats oder des Treibmittels, Anwärmen des Treibmittels unterhalb der Aktivierungstemperatur, um einen klebrigeren Zustand zu erreichen, Verwenden eines flüssigen Treibmittels, etc. Auch die Verwendung eines Öl zum Benetzen und klebrig-machen der Granulatoberflächen stellt eine solche Möglichkeit dar, die die quantitative und/oder qualitative Anhaftung des Treibmittels an den Körnern des Kunststoffgranulats zu verbessern. Weiter denkbar ist ebenfalls ein Einsatz von Klebstoffen oder Harzen, um die Adhäsion an den Oberflächen der Granulatkörner zu erhöhen.

Hier wird eine Fachperson weitere fachübliche Möglichkeiten erkennen, wie eine verbesserte Anhaftung des Treibmittels am Granulat erreicht werden kann, ohne vom Grundgedanken der Erfindung abzuweichen, damit ein mit Treibmittel vermischtes Kunststoffgranulat zum Herstellen eines Einlegeteil bzw. eines orthopädisch wirksamen Bauteils mittels eines Pellet-FDM-3D-Druckverfahren verwendet werden kann.

Für das erfindungsgemäße Verfahren geeignete Kunststoffe sind alle thermoplastischen Kunststoff-Materialien, zum Beispiel ausgewählt aus der Gruppe von: PLA, ABS, ASA, PA, PC, PP, PS, PE, PETG, TPU (thermoplastisches Polyurethan), EVA oder ein anderes thermoplastisches oder thermoelastisches Material, das für die Herstellung von orthopädischen Schuheinlagen zugelassen ist. Die beispielhaft angegebenen Materialien eignen sich aufgrund ihrer (Heilmittel)- Zulassung zur Herstellung von orthopädischen Schuheinlagen.

Zur Herstellung von Einlegeteilen gemäß der Erfindung eignen sich auch faserverstärkte Kunststoffe, insbesondere carbonfaserverstärkte Kunststoffe, welche die mechanische und/oder dynamische Belastbarkeit des Einlegeteil weiter erhöhen.

Durch die erfindungsgemäß mittels eines Treibmittels aus expandierten, aufgeschäumten thermoplastischen Kunststoff-Material 3D-gedruckten Einlegeteile gelingt es, einfach, kostengünstig und prozesssicher individualisierte, insbesondere patienten-individualisierte orthopädisch wirksame Komponenten für Schuheinlagen und Schuheinlagenrohlinge herzustellen, die aus einem 3D-Datenmodell, zum Beispiel von einem patientenindividuellen Fußabdruck stammen. Speziell gegenüber den aus dem Stand der Technik bekannten 3D-Druckverfahren, die mit Kunststofffilamenten arbeiten und Bauteile aus Vollmaterial erstellen, haben die mittels dem erfindungsgemäßen beschriebenen Verfahren hergestellten Einlegeteile aus expandiertem Schaumkunststoff ein wesentlich geringeres Gewicht, bei gleicher oder sogar höherer Festigkeit und Elastizität.

Wie eingangs bereits aufgezeigt, wurden bislang 3D-gedruckte orthopädisch wirksame Einlegeteile fast ausschließlich nur in die Produktion von sequenziell, schichtweise aufgebauten Schuheinlagen bzw. Schuheinlagenrohlingen einbezogen, da die Verbindung zu anderen Materialien der Schuheinlagen schwierig ist. Für solche Verbindungen herkömmlicher, mit einem Filament 3D-gedruckte Einlegeteil wird neben einem (zusätzlichen) Kleber, meist ein Heißkleber, oftmals auch sogenannte Haftvermittler benötigt, um die einzelnen Lagen herkömmlicher Schuheinlagen mit dem Material des Filament-3D-gedruckten Einlegeteils zu verbinden. Bei im RIM-Verfahren hergestellten Schuheinlagen aus PUR-Schäumen wurden im 3D-Druckverfahren aus Filamenten hergestellte Einlegeteile nur sehr selten eingesetzt, da aufwendige Vorarbeiten oder zusätzliche Materialien, wie Haftvermittler erforderlich waren, um eine verlässliche Verbindung der Einlegeteile mit insbesondere dem Polsterkörper der Schuheinlage zu schaffen. Eine andere Möglichkeit wäre in Anlehnung an EP 1 602 294 B1 eine allseitige Ummantelung des Filament-3D-gedruckten Einlegeteils mit PUR-Schaum in der Ausschäumform, was jedoch mit komplexen Fixiereinrichtung einhergeht, die verhindern, dass das Einlegeteil während des RIM-Schäumens aus seiner orthopädisch vorbestimmten Lage verrutscht.

Die erfindungsgemäße Schuheinlage mit dem erfindungsgemäß Erstellten/3D-gedruckten Einlegeteil macht sich dabei das oben beschriebene Pellet-3D-Druckverfahren zu Nutze, bei dem Extrudatstränge aus mit Treibmittel aufgeschäumten und expandierten thermoplastischen Kunststoff-Material mäander-, bahnen- und/oder schichtweise so abgelegt werden, dass die Schichten der Extrudatstränge im bestimmungsgemäßen Gebrauch der Schuheinlage eine rippenartige Wellenstruktur bilden, an der sich der RIM-PUR-Schaumkunststoff anlagern bzw. in die sich der RIM-PUR-Schaumkunststoff einlagern/eingreifen kann, wobei die rauen und porösen Oberflächen der Extrudatstränge das Eingreifen und Anhaften des RIM-PUR-Schaumkunststoffs begünstigen und die Anhaftung verstärken.

Eine weitere Verbesserung/Verstärkung der Anhaftung des RIM-PUR-Schaumkunststoffs an einem erfindungsgemäßen Einlegeteil kann erreicht werden, wenn das Förderband in einem Winkel zur Horizontalen angeordnet wird. Das bedeutet einerseits, dass die Schichten in der bestimmungsgemäßen Lage des Einlegeteils weder horizontal noch vertikal parallel zueinander verlaufen, sondern in einem dazu abweichenden Winkel, entsprechend der Schrägstellung des Förderbandes während der Herstellung. Auch mit der Schrägstellung bilden sich durch die schichtweise Ablage der Extrudatstränge auf das geneigte Förderband, zumindest an der Oberseite und den Seitenflächen des Einlegeteils Rillen und Stufen aus, die an der Unterseite aufgrund der Schwerkraft flach gedrückt sind. An diesen Rillen und Stufen erkennt zumindest eine Fachperson am fertiggedruckten Einlegeteil, in welchem Winkel die einzelnen Extrudatstränge / Schichten von Extrudatsträngen während des 3D-Druckens auf eine Arbeitsfläche abgelegt wurden. Dies kann erfindungsgemäßen vertikal auf ein horizontal ausgerichtetes Förderband erfolgen, als auch ein in einem Winkel dazu geneigten Förderband.

Ferner erkennt die Fachperson an der porösen Oberflächenbeschaffenheit des fertigen 3D-gedruckten Einlegeteils, dass die Extrudatstränge nicht aus einem Vollmaterial bestehen, da deren Oberflächenstruktur rau ist, was ein klares Indiz für einen geschäumten Kunststoff ist. Ferner lässt auch das geringe Gewicht eines erfindungsgemäß 3D-gedruckten Einlegeteils den Fachmann schnell erkennen, dass ein derart erfindungsgemäß erstelltes Einlegeteil nicht aus einem Vollmaterial besteht, so wie es beim Filament-3D-drucken entsteht. Ein erfindungsgemäßen 3D-gedrucktes Einlegeteil ist, verglichen mit Einlegeteilen die im Filament-3D-Druckverfahren hergestellt werden, sehr leicht.

Die Rillen und Stufen der rippenartigen Wellenstruktur, die beim erfindungsgemäßen 3D-Drucken mit den Extrudatstränge aus aufgeschäumten/expandierten Kunststoffmaterial gebildet werden, erleichtern die mechanische Haftung des RIM-PUR-Schaumes an den Oberflächen des Einlegeteils und vermeiden oder reduzieren damit die Notwendigkeit des Einsatzes eines Haftvermittlers. Überraschenderweise hat sich gezeigt, dass auch Materialien, die keine Urethangruppe in der chemischen Formel aufweisen, mit reaktionsgeschäumten PUR nicht nur direkt anschäumbar sind, sondern mit dem 3D-gedruckten Einlegeteilen eine stabile, alltagstaugliche Verbindung eingehen, die auf einer form- und/oder stoffschlüssigen Verbindung basiert.

Zu dieser erhöhten, mechanischen Anhaftung bzw. Verankerung des RIM-PUR-Schaumkunststoffs an den Oberflächen eines erfindungsgemäßen Einlegeteil trägt ebenfalls das erfindungsgemäß während des 3D-Druckens erzeugte, Treibmittel-aufgeschäumte und expandierte Kunststoffmaterial bei, das eine raue, poröse Oberflächenstruktur zeigt - im Gegensatz zu Filament-3D-gedruckten Einlegeteilen, die im Wesentlichen glatte Extrudatstrangoberflächen zeigen. Diese rauen, porösen Oberflächen der Extrudatstränge gemäß der Erfindung erlauben dem PUR-Schaum, der sich in der Ausschäumform bildet, sich in diesen oberflächigen "Unebenheiten" festzusetzen. Somit tragen sowohl die Rillen und Stufen der schichtweise abgelegten Extrudatstränge als auch die Unebenheiten/Poren der Oberflächen der erfindungsgemäßen gebildeten Extrudatstränge dazu bei, ein Einlegeteil fest an den RIM-PUR-Schaum eines angeschäumten Polsterkörpers anzubinden, da sich der RIM-PUR-Schaum bei seiner Expansion in diese Unebenheiten/Poren hineindrückt. Ergänzt wird diese formschlüssige Verbindung ggfs. durch eine stoffschlüssige Verbindung, wenn ein Material für das 3D-Drucken des Einlegeteil ausgewählt wird, das mit dem PUR-Schaum eine Klebe- und/oder Schmelzverbindung eingeht, wie z.B. TPU, PC, ABS, PS oder PA.

Gemäß der Erfindung, und in Abkehr vom bisherigen Stand der Technik, können Einlegeteile, die mit dem oben beschriebenen Pellet-FDM-3D-Druckverfahren hergestellt bzw. erstellt werden, somit ohne weitere Vorbereitung direkt in eine Schäumformhälfte einer RIM-Schäumform eingelegt werden und dort während des RIM-Schäumens mit dem reaktionsgeschäumten Polyurethan (PUR) angeschäumt werden, wobei sich das reaktionsgeschäumte Polyurethan (PUR) mit dem Einlegeteil ausreichend fest zu einem Schuheinlagenrohling verbindet. Dies wird dadurch erreicht, weil die Oberflächenstruktur des erfindungsgemäßen Einlegeteils rau, porös, gerillt und/oder gestuft ist und somit eine Art Hinterschneidungen für den ebenfalls porösen RIM-PUR-Schaumkunststoff bildet bzw. bereitstellt. In günstig gewählten Materialpaarungen für das Einlegeteil und den PUR-Schaumkunststoff kann sich darüber hinaus eine Klebe-oder Schmelzverbindung zwischen dem Material des Einlegeteils und dem RIM-PUR-Schaumkunststoff ausbilden.

Nach dem Einlegen des erfindungsgemäß 3D-gedruckten Einlegeteils in eine geöffnete RIM-Ausschäumform, z.B. in eine obere oder untere RIM-Schäumformhälfte, kann in diese RIM-Ausschäumform im geöffneten Zustand mittels eines Mischkopfes eine vorbestimmte Menge eines Polyols und eines Isocyanats eingebracht werden, um z.B. einen Polsterkörper einer erfindungsgemäßen Schuheinlage aus RIM-PUR-Schaumkunststoff aufzuschäumen bzw. auszubilden. Hierzu wird die RIM-Ausschäumform nach Einbringen des Polyols und des Isocyanats geschlossen, wodurch sich in der RIM-Ausschäumform eine Kavität ausbildet, die von dem sich bildenden, aufschäumenden und expandierenden PUR-Schaum-kunststoff ausgefüllt wird. Dabei wird das zuvor in die Kavität eingelegte Einlegeteil von dem PUR-Schaumkunststoff angeschäumt und an dem entstehenden Polsterkörper festgesetzt.

Nach dem Expandieren des PUR-Schaumkunststoffs in der RIM-Ausschäumform kann dieser in der RIM-Ausschäumform aushärten, bevor die RIM-Ausschäumform geöffnet wird und der Schuheinlagenrohling (Einlegeteil + Polsterkörper) entnommen werden. Je nach Ausgestaltung und weiterem Verwendungszweck kann der Schuheinlagenrohling direkt als Schuheinlage in einen Schuh eingelegt werden und/oder von einer Orthopädie-Fachperson an einen Patientenfuß weiter individuell angepasst werden.

In einer weiteren Ausführungsform der Erfindung können vor oder nach dem Einlegen des gemäß der Erfindung hergestellten Einlegeteils flächige Bezugs- oder Deckenmaterialien in eine geöffnete RIM-Ausschäumform in die RIM-Ausschäumform eingelegt und dort fixiert werden, die später die Ober-, Unter- oder Seitenbezügen der Schuheinlage bilden. So kann z.B. das Einlegeteil in eine untere Schäumformhälfte eingelegt werden, die die Unterseite der Schuheinlage formt und über die formgebenden Oberflächen der oberen Schäumformhälfte ein Bezugsstoff gespannt werden, der dann mit seiner der Kavität abgewandten Seite die Oberseite der fertiggeschäumten Schuheinlage bildet. Ähnlich kann ein Bezugsstoff über das Einlegeteil und die formgebenden Oberflächen der unteren Schäumformhälfte gespannt werden, sodass die Unterseite der fertiggeschäumten Schuheinlage von diesem Bezugstoff und dem Einlegeteil gebildet wird.

In einer weiteren Abwandlung der Erfindung kann sowohl ein oberseitiger als auch ein unterseitiger Bezugsstoff über die entsprechenden formgebenden Oberflächen der RIM-Ausschäumform gespannt werden. Ebenfalls ist das Einbringen einer flexiblen Lage in die Kavität vorstellbar, die die Kavität in zwei Bereiche teilt, in denen jeweils eine Mischung aus Polyol und Isocyanat so eingebracht wird, dass die flexible Lage in einem Bereich der Schuheinlage oberhalb des Polsterkörpers und im anderen Bereich der Schuheinlage unterhalb des Polsterkörpers angeordnet ist. Hierfür weist die flexible Lage bevorzugt eine Öffnung, Freimachung oder Durchtrittsmöglichkeit für einen der beiden Mischköpfe auf, damit eine Materialeintragstelle unterhalb der flexiblen Lage angeordnet sein kann und die eingebrachte Polyol/Isocyanat-Mischung in einem der beiden Bereiche unterhalb der flexiblen Lage aufschäumen bzw. expandieren kann.

In einer weiteren Abwandlung der Erfindung kann das Einlegeteil in Art einer Fersenschale ausgebildet sein, die den Rückfußbereich der Schuheinlage versteift und eine Fuß- bzw. Fersenstützende Funktion zeigt. Gleichzeitig kann in diesem Einlegeteil eine Ausnehmung vorgesehen sein, in die der PUR-Schaumkunststoff des Polsterkörper eindringen kann, um innerhalb des Rückfußbereiches eine bessere Dämpfungswirkung für die Ferse bzw. das Fersenbein bereitzustellen.

Im Folgenden wird die Erfindung anhand von schematischen Zeichnungen beispielhaft näher erläutert. Dabei zeigen die Figuren nur beispielhafte Ausführungsformen der erfindungsgemäßen Schuheinlage bzw. des Schuheinlagenrohlings und schränken den Erfindungsgedanken nicht auf diese Ausführungsformen ein. Es zeigen:
- Figur 1: schematisch eine Draufsicht eines erfindungsgemäßen Einlegeteils in einer ersten Ausführungsform;
- Figur 2: schematisch einen perspektivischen Längsschnitt durch das in Figur 1 gezeigte Einlegeteil in seiner bestimmungsgemäßen Einbaulage;
- Figur 3: schematisch eine perspektivische Ansicht eines erfindungsgemäßen Einlegeteils in einer zweiten Ausführungsform;
- Figur 4: schematisch einen perspektivischen Längsschnitt durch das in Figur 3 gezeigte Einlegeteil in seiner bestimmungsgemäßen Einbaulage;
- Figur 5: schematisch eine perspektivische Draufsicht eines ersten Ausführungsbeispiels für einen komplettierten Schuheinlagenrohlings bzw. einer komplettierten Schuheinlage gemäß der Erfindung;
- Figur 6: schematisch einen Längsschnitt durch den in Figur 5 gezeigten Schuheinlagenrohling bzw. Schuheinlage gemäß der Erfindung;
- Figur 7: schematisch eine perspektivische Draufsicht auf ein erfindungsgemäßes Einlegeteil in einer dritten Ausführungsform;
- Figur 8: schematisch eine perspektivische Draufsicht eines zweiten Ausführungsbeispiels für einen komplettierten Schuheinlagenrohlings bzw. einer komplettierten Schuheinlage gemäß der Erfindung;
- Figur 9: schematisch einen Längsschnitt durch den in Figur 8 gezeigten Schuheinlagenrohling bzw. Schuheinlage gemäß der Erfindung;
- Figur 10: schematisch ein Ablaufdiagramm des erfindungsgemäßen Verfahrens zur Herstellung eines Einlegeteils gemäß der Erfindung zur weiteren Herstellung eines Schuheinlagenrohlings bzw. einer Schuheinlage gemäß der Erfindung;

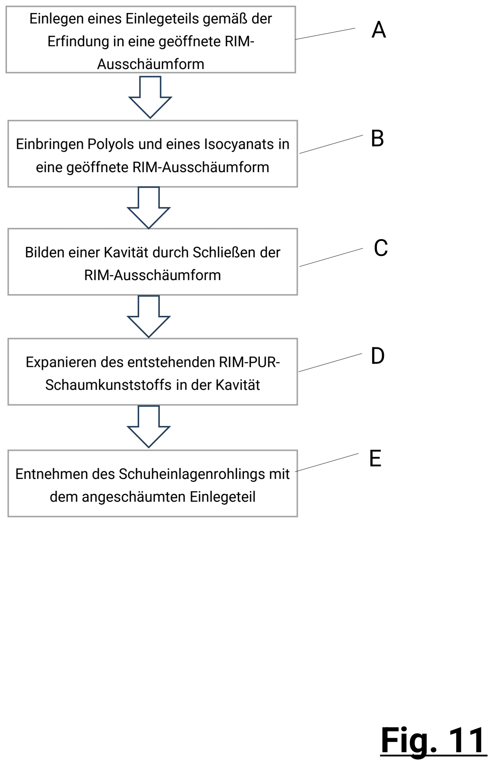

- Figur 11: schematisch ein Ablaufdiagramm des erfindungsgemäßen Verfahrens zur Herstellung eines Schuheinlagenrohlings bzw. eine Schuheinlage gemäß der Erfindung mit einem Einlegeteil gemäß der Erfindung.

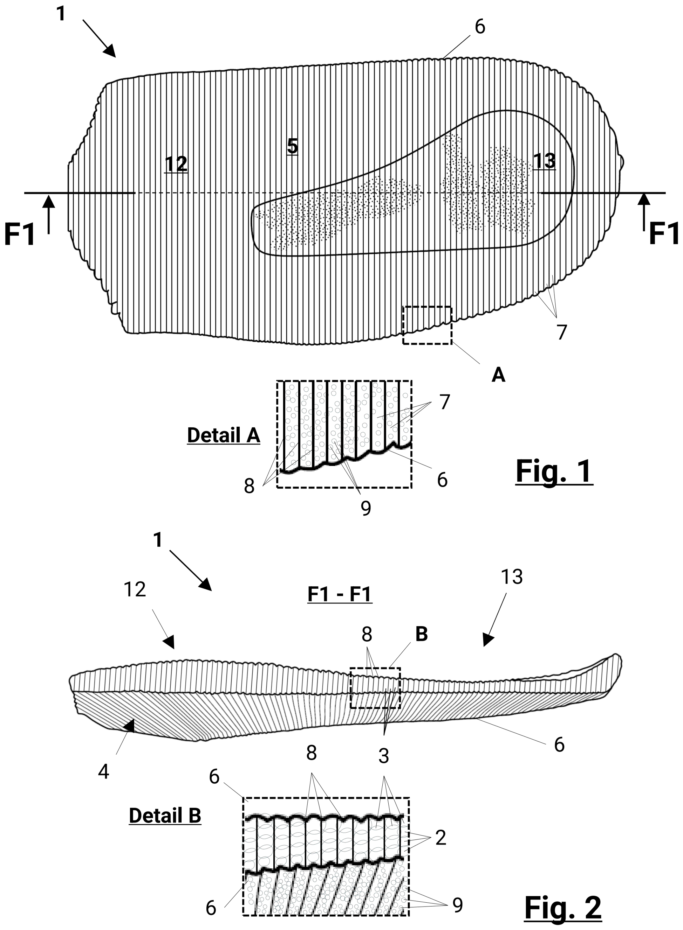

Figur 1 zeigt eine Draufsicht einer Oberseite 5 eines erfindungsgemäßen Einlegeteils 1 in einer ersten Ausführungsform, wobei das Einlegeteil 1 für die Unterstützung des Fußes im Fersenbereich 13 und im Mittelfußbereich 12 vorgesehen ist. In der Draufsicht der Figur 1 ist aufgrund der Herstellung des Einlegeteils 1 im 3D-Druckverfahren ein schichtweiser, bahnenartiger Aufbau des Einlegeteils 1 erkennbar. Diese Bahnen /Streifen 7 (siehe auch Detail A von Fig. 1) entsprechen den einzelnen Extrudatsträngen 2, die in etwa parallel zueinander, nebeneinander und/oder übereinander abgelegt sind und das erfindungsgemäße Einlegeteil 1 bilden (siehe hierzu auch Detail B von Fig. 2).

Aus Figur 2, welche einen perspektivischen Längsschnitt F1-F1 durch das in Figur 1 gezeigte Einlegeteil 1 zeigt, sowie den Details A und B, erkennt man an der Kontur des Einlegeteils 1 ferner, dass die Ränder 6 des Einlegeteils 1 sägezahnartig, gezackt ausgebildet sind, woraus zumindest für eine Fachperson ableitbar ist, dass quer zum Einlegeteil 1, d.h. in Sohlenbreitenrichtung, Bahnen/Streifen 7 und Rillen 8 auf der Oberseite 5 des Einlegeteils 1 verlaufen.

Diese Streifen 7 und Rillen 8 entstehen durch das erfindungsgemäße 3D-Drucken, das auf ein getaktet angetriebenes Förderband als Arbeitsfläche erfolgt. Dabei wird in jedem Takt des Förderbandes eine Schicht 3 aus zumindest einem Extrudatstrang 2 aus aufgeschäumten Kunststoff gebildet (siehe Fig. 2 und Detail B in Fig. 2). Wie schematisch aus Detail B erkennbar ist, besteht eine Schicht 3 aus mehreren Extrudatsträngen 2, die vertikal übereinander aufeinander abgelegt wurden. Nach Komplettierung einer Schicht 3 mit einem oder mehreren Extrudatsträngen 2 wird das Förderband einen Schritt/Takt weiter in Förderbandrichtung, d.h. in Sohlenlängsrichtung verfahren. Aufgrund dessen, dass der 3D-Druckkopf in Sohlenlängsrichtung (X-Richtung) unbeweglich ist und das Förderband in Sohlenlängsrichtung einen Schritt weiter verfahren wird, wird die nächste Schicht 3 /Stapel Extrudatstränge 2 in Sohlenlängsrichtung neben der zuvor gebildete Schicht 3 aufgebaut/ausgebildet, wodurch die schichtartige Ausbildung des erfindungsgemäßen Einlegeteil zustande kommt. Da die Extrudatstränge 2 im warmen und weichen Zustand zumindest teilweise komplett expandiert abgelegt werden, kann sich jeder frisch abgelegte Extrudatstrang 2 mit dem benachbarten darunter und daneben liegenden Extrudatstrang zumindest formschlüssig und/oder auch stoffschlüssig verbinden, indem der weiche Kunststoff-Schaum in die Poren 9 des darunterliegenden Extrudatstranges 2 oder der Schicht 3 eindringt und/oder mit dem Kunststoff-Schaum des darunterliegenden Extrudatstranges 2 oder der Schicht 3 teilweise verschmilzt.

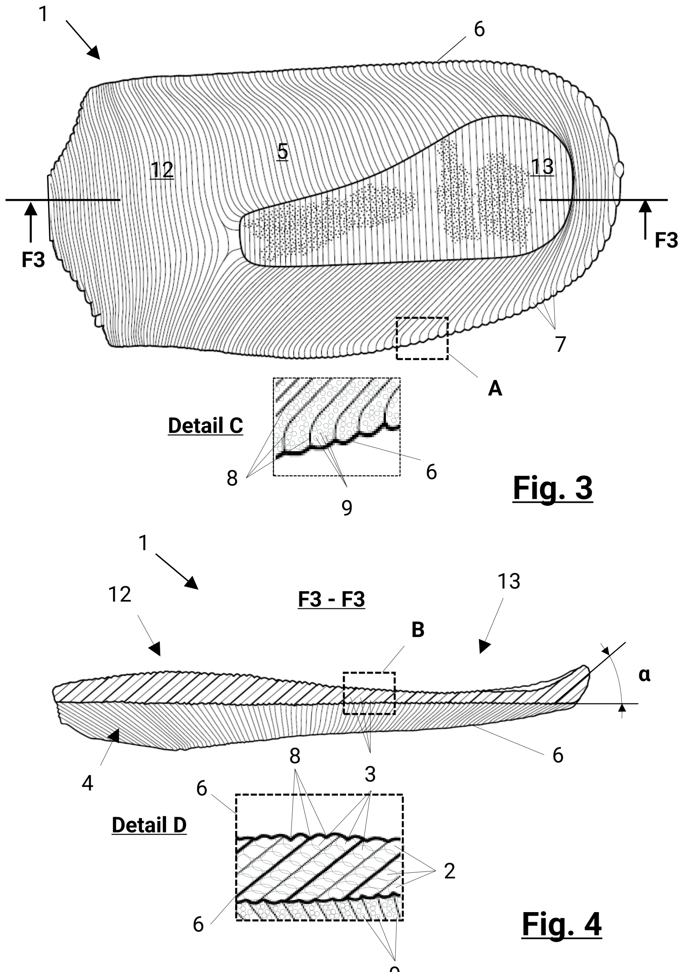

In den Details B (Fig. 2) und D (Fig. 4) wurde dies aus zeichnungstechnischen Gründen mit sich überschneidenden Hüllkurven der Extrudatstränge 2 grafisch dargestellt. Auch die in den Details A bis D dargestellten Poren 9 entsprechen nicht den tatsächlichen Porengrößen und sind rein darstellungstechnisch vergrößert wiedergegeben. In realen Einlegeteilen 1 kann die Porengrößen geringer oder größer sein, jedoch sind diese in den meisten Fällen mit bloßen Auge oder mit einer Lupe leicht erkennbar.

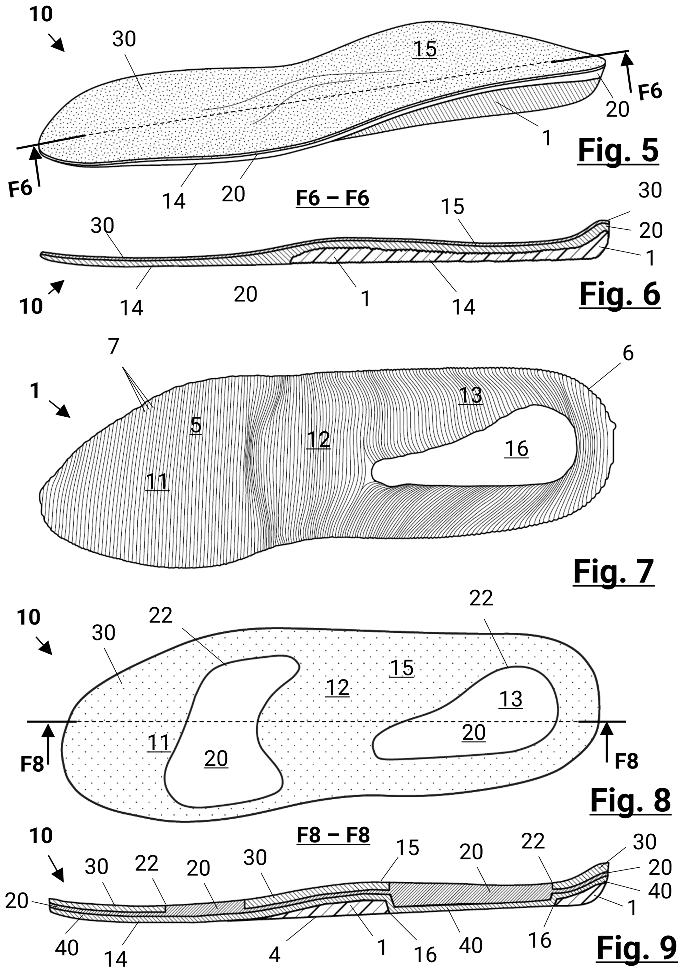

Die Ablage der Extrudatstränge 2 im aufgeschäumten, zumindest teil-expandierten jedoch noch weichen und warmen Zustand auf das Förderband hat eine abgeflachte, fast ebene Unterseite 4 des Einlegeteils 1 zur Folge (siehe Fig. 2 und Fig. 4), weil die jeweils ersten, noch weichen und warmen Extrudatstränge einer jeden Schicht 3, mit dem Förderband direkt in Kontakt kommen und durch die Extrudatstränge, die auf diese ersten Extrudatstränge abgelegt werden, zusammengedrückt werden, sodass die Bahnen 7 und Rillen 8 auf der Unterseite des Einlegeteils 1 weniger stark ausgeprägt sind, als auf der Oberseite 5 und den Seitenflächen bzw. Rändern 6. In der Einbaulage /Gebrauchslage des Einlegeteils 1 ist die Unterseite 4 im Wesentlichen parallel zur Horizontalen, (vgl. auch Figuren 6 bis 8).

Ferner zeigen die einzelnen Extrudatstränge 2 sofern sie an den Oberflächen des Einlegeteils 1 sichtbar sind, eine Schaumstoff-artige, raue und poröse Oberflächenstruktur, mit einer Vielzahl von Poren 9. Wie oben im allgemeinen Teil bereits ausführlich erläutert, werden durch die Bahnen 7, Rillen 8 und Poren 9 eine Vielzahl von Hinterschnitten gebildet, in welche der reaktionsgeschäumte RIM-PUR-Schaumkunststoff im erfindungsgemäß nachfolgenden Schäumschritt zum Formen des PUR-Polsterkörpers 20 zum Komplettieren einer erfindungsgemäßen Schuheinlage 10 während seiner Expansion eindringen und sich dort verhaken/verankern kann. Somit entsteht eine mechanische Verbindung /Verankerung, d.h. ein Formschluss des Einlegeteils 1 mit dem reaktiv entstehenden RIM-PUR-Schaumkunststoff.

In den Figuren 3 und 4 ist eine zweite Ausführungsform des erfindungsgemäßen Einlegeteils 1 gezeigt, wobei Figur 4 einen perspektivischen Längsschnitt F3-F3 durch das in Figur 3 gezeigte Einlegeteil 1 zeigt. Aus den Details C und D der Figuren 3 und 4, erkennt man wiederum das sägezahnartige Profil der Ränder 6 (Kontur) des Einlegeteils 1. Aus dieser gezackten Ausbildung der Ränder 6 erkennt die Fachperson, dass auf der Oberseite 5 und zumindest auf den Seitenflächen des Einlegeteils 1 auch in Sohlenbreitenrichtung Bahnen/Streifen 7 und Rillen 8 verlaufen. Zudem ist aus den Figuren 3 und 4 sowie aus den Details C und D erkennbar, dass die Schichten 3 um einen Winkel α zur Horizontalen geneigt sind, wobei die Unterseite 4 des Einlegeteils 1 in seiner bestimmungsgemäßen Einbaulage in einer Schuheinlage 10 weiterhin in etwa parallel zu Horizontalen ist. In dieser Ausführungsform des erfindungsgemäßen Verfahrens zur Herstellung eines orthopädisch wirksamen individualisierten Einlegeteil 1 weist, aufgrund der Neigung des Förderbandes um einen Winkel α zur Horizontalen, jeder Verfahrschritt des Förderbandes eine Richtungskomponente in Sohlenlängsrichtung (X-Richtung) als auch eine Richtungskomponente in Sohlendickenrichtung (Z-Richtung) auf.

Die Ränder 6 der Schichten 3 des zweiten Ausführungsbeispiels sind ebenfalls, wie die Ränder 6 der Schichten 3 des ersten Ausführungsbeispiels, gezackt, was durch die Bahnenartige Ablage zustande kommt. Allerdings verlaufen die Schichten 3 im Einlegeteil 1 des zweiten Ausführungsbeispiels nicht mehr senkrecht zur Unterseite 4, sondern in einem Winkel **α** zur Unterseite 4 des Einlegeteils 1, der dem Neigungswinkel des Förderbandes zur Horizontalen während des 3D-Druckens entspricht. Durch die Neigung des Förderbandes wird eine verbesserte Anlage eines frisch abgelegten Extrudatstranges 2 zu den bereits zuvor abgelegten Extrudatsträngen 2 erreicht, da hier eine Komponente der Schwerkraft, die bei der Ablage der Extrudatstränge 2 auf diese wirkt, auch in Sohlenlängsrichtung (=Förderrichtung) gerichtet ist.

Figur 5 zeigt eine perspektivische Ansicht eines Schuheinlagenrohlings 10 bzw. einer Schuheinlage 10 gemäß der Erfindung mit einem Einlegeteil 1 gemäß der Figuren 3 und 4. Figur 6 zeigt die Schuheinlage 10 der Figur 5 in einem Längsschnitt. Die Schuheinlage 10 der Figuren 5 und 6 zeigt ferner einen an das Einlegeteil 1 angeschäumten Polsterkörper 20 aus RIM-PUR-Schaumkunststoff, der sich über die gesamte Länge der Schuheinlage 10 erstreckt. Eine Fachperson erkennt, dass eine analoge Schuheinlage 10 auch mit einem Einlegeteil 1 gemäß der Figuren 1 und 2 hergestellt werden kann, da sich die Einlegeteile 1 der ersten und zweiten Ausführungsform nur durch den Neigungswinkel der Schichten 3, in denen die Extrudatstränge 2 abgelegt sind, unterscheiden. Das in den Figuren 5 und 6 schematisch dargestellte Einlegeteil 1 ist somit mit einem gegenüber der Horizontalen geneigt angeordneten Förderband 3D-gedruckt worden.

Figur 6 zeigt einen Längsschnitt durch den in Figur 5 gezeigten Schuheinlagenrohling 10 bzw. Schuheinlage 10 gemäß der Erfindung, aus dem gut erkennbar ist, wie sich der PUR-Schaumkunststoff des Polsterkörpers 20 in die Stufen 7, Rillen 8 und Poren 9 des Einlegeteils 1 verhakt/verankert, sodass der Polsterköper 20 und das Einlegeteils 1 zumindest über einen Formschluss miteinander verbunden sind. Durch geeignete Wahl des thermoplastischen Kunststoffs beim 3D-Drucken des Einlegeteils 1 kann zusätzlich zu diesem Formschluss auch ein Stoffschluss zwischen dem PUR-Schaumkunststoff des Polsterkörpers 20 und dem Material des Einlegeteils 1 erreicht werden, wenn sich das Material des Einlegeteils 1 mit dem PUR-Schaumkunststoff bei der Reaktion von Polyol und Isocyanat verklebt und/oder aufgrund der Reaktionswärme bei RIM-Schäumen die beiden Schaummaterialien zumindest partiell miteinander verschmelzen.

Auf dem Polsterkörper 20 der in den Figuren 5 und 6 gezeigten Schuheinlage 10 ist auf der Oberseite 15 ein optionaler Bezug 30 / ein optionales Deckmaterial 30 sichtbar. Dieser zusätzliche, erfindungsgemäß nicht erforderliche Bezug 30 wurde bevorzugt vor dem Einbringen der Polyol / Isocyanat - Mischung in die RIM-Ausschäumform über die Schäumformhälfte gespannt, welche das oberseitige Fußbett der Schuheinlage 10 ausbildet. Auf diese Weise wurde der Bezug 30 analog zum Einlegeteil 1 durch Anschäumen mit PUR-Schaumkunststoff an der Oberseite 15 der Schuheinlage 10 festgesetzt. Diese somit aus drei Komponenten bestehende und erfindungsgemäß mit nur einem RIM-Schäumschritt hergestellte Schuheinlage 10, der alle drei Komponenten gleichzeitig miteinander verbindet, kann direkt in einen Schuh eingelegt werden, oder durch einen Orthopädie-Fachmann durch Schleifen beispielsweise der Unterseite 14 der Schuheinlage 10 und/oder der Unterseite 4 des Einlegeteils 1 an eine Schuhinnenform bzw. an die Bedürfnisse eines Trägers der Schuheinlage 10 angepasst werden.

Figur 7 zeigt ein weiteres Beispiel für ein erfindungsgemäßes Einlegeteil 1 in einer dritten Ausführungsform gemäß der Erfindung, wobei sich dieses Einlegeteil 1 über die gesamte Länge einer Schuheinlage 10 erstreckt und beispielsweise die Unterseite 14 einer Schuheinlage bildet. Abweichend vom Einlegeteil 1 gemäß der Figuren 1 bis 6 zeigt das in Figur 7 dargestellte Einlegeteil 1 eine Ausnehmung/Aussparung 16 im Fersenbereich 13. Diese Aussparung/Ausnehmung 16 kann bereits während des 3D-Druckens ausgebildet werden oder kann nachträglich durch Ausstanzen aus dem Einlegeteils 1 erzeugt werden. In diese Aussparung 16 kann im nachfolgenden Schäumschritt zum Ausbilden eines Schuheinlagenrohlings 10 RIM-PUR-Schaumkunststoff eindringen und so beispielsweise eine weichere Polsterung in diesem Bereich bereitstellen, wie dies z.B. für Patienten mit Fersensporn angezeigt ist.

Eine derart mittels RIM-Anschäumen des Einlegeteils 1 eines Polsterkörpers 20 im RIM-Schäumverfahren komplettierte Schuheinlage 10 bzw. Schuheinlagenrohling 10 ist in der Figur 8 in einer Draufsicht und in der Figur 9 in einem Längsschnitt schematisch dargestellt. Zur Verbesserung der Polstereigenschaften der Schuheinlage 10 wurde im Fußballenbereich des Vorderfußbereichs 11 und im Fersenbereich 13 der Bezug 30 an der Oberseite 15 der Schuheinlage 10 mit Ausnehmungen 22 versehen, in die der RIM-PUR-Schaumkunststoff während des RIM-Schäumens des Polsterkörpers 20 eintreten kann, (vgl. Figur 9). Somit beeinflusst der Bezug 30 in diesen ausgesparten Bereichen 22 nicht die Dämpfungseigenschaften des RIM-PUR-Schaumkunststoffs des Polsterkörpers 20 und eine weichere, oder ggfs. auch härtere, Bettung des Patientenfußes kann in diesen Bereichen erreicht werden. Zusätzlich können diese inselartigen Ausnehmungen 22 auch als Dekorelemente dienen, um einer Schuheinlage 10 ein ansprechenderes Dekor/Design zu verleihen.

Figur 9 zeigt darüber hinaus, in einer weiteren Ausführungsform und in Abwandlung der in den Figuren 4 und 5 gezeigten Ausführungsform, eine Schuheinlage 10 mit einem optionalen unteren Bezugsmaterial 30. Dieses wurde über das Einlegeteils 1 gespannt, das zuvor in eine Schäumformhälfte der geöffneten RIM-Ausschäumform eingelegt wurde. Danach wurde die Polyol / Isocyanat - Mischung mittels eines Mischkopfes in die RIM-Ausschäumform auf das untere Bezugsmaterial 30 aufgebracht und die RIM-Schäumform geschlossen. Hierbei ist das untere Bezugsmaterial 30 bevorzugt so gewählt, dass es sich durch die Reaktionswärme, die bei der Reaktion von Polyol mit Isocyanat entsteht, während des Ausschäumens mit dem Einlegeteil formschlüssig und/oder sogar stoffschlüssig mit dem PUR-Schaumkunststoff des Polsterkörpers 10 verbindet. Ein hierfür geeignetes Bezugsmaterial ist beispielsweise ein ein-materialiges, trägerloses PU-Flächenmaterial, wie z. B. in EP 4 353 115 A1 beschrieben, wobei in diesen Fall das Einlegeteils 1 bevorzugt aus thermoplastischen Polyurethan (TPU) 3D-gedruckt wurde, das erfindungsgemäß während des Pellet-3D-Druckens aufgeschäumt wurde.

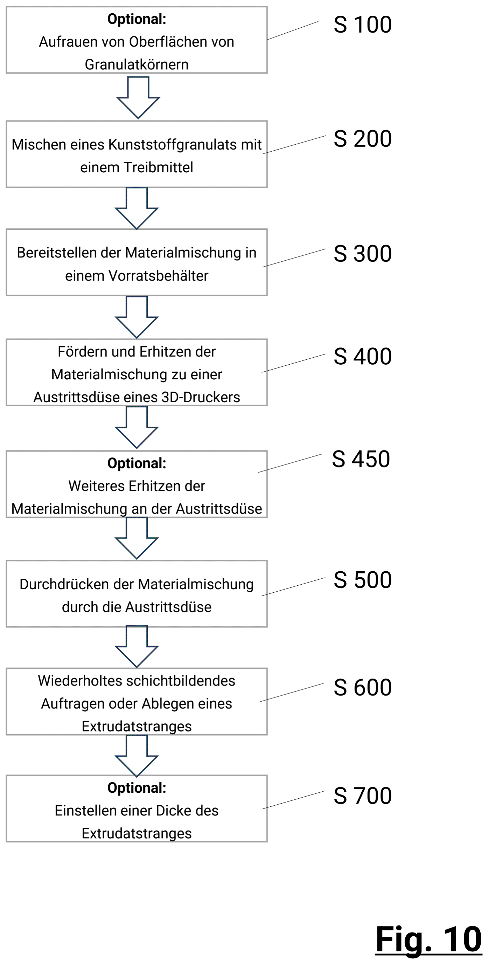

Das erfindungsgemäße Verfahren zum Herstellen eines Einlegeteils 1 ist beispielhaft in Figur 10 schematisch dargestellt. Hierzu sieht das erfindungsgemäße Verfahren in einem Schritt S 200 zunächst vor, an die Körner eines Kunststoffgranulats ein Treibmittel physikalisch anzulagern, bzw. diese Granulatkörner mit einem Treibmittel zu beschichten, zu benetzen und/oder zu vermischen. Das Treibmittel besitzt eine Aktivierungstemperatur, ab der aus dem Treibmittel gasförmige Produkte entstehen, die, wenn sie sich in einer Kunststoffschmelze befinden, zu einem Aufschäumen der Kunststoffschmelze führen. Derartige Treibmittel, die auch als Schaumbildner bekannt sind, liegen bei Raumtemperatur üblicherweise in Pulverform vor. Es sind aber auch flüssige Treibmittel für die Durchführung des erfindungsgemäßen Verfahrens denkbar.

Das Kunststoffgranulat weist eine Vielzahl von Granulatkörnern auf, welche zum Beispiel in Form kleiner zylindrischer Pellets oder als unregelmäßig geformte Körner vorliegen. Üblicherweise weist ein am Markt verfügbares Kunststoffgranulat Granulatkörnern in Form kleiner Zylinder auf, mit üblicherweise einem Durchmesser und einer Länge von einigen mm. Diese kleinen zylindrischen Granulatkörner, die durch Brechen von langgestreckten zylindrischen Kunststofffilamenten entstehen, weisen insbesondere im Bereich der Zylindermantelfläche eine relativ glatte Oberfläche auf, welche ein zuverlässiges Anhaften des Treibmittelpulvers beim Mischen mit dem Granulat gegebenenfalls negativ beeinflusst. Die Stirnseiten/Bruchflächen dieser Granulatkörner sind oftmals rauer, sodass Partikel eines Treibmittelpulvers dort besser anhaften können.

Damit ausreichend Treibmittel an den Granulatkörner anhaften kann, erfolgt optional, d.h. falls erforderlich, in einem dem Mischschritt S200 vorgeschalteten Schritt S 100, also vor dem Vermischen des Treibmittels mit dem Kunststoffgranulat in Schritt S 200, ein Aufrauen der Oberflächen der Granulatkörner. Ein solches Aufrauen bewirkt, dass sich mehr (Pulver-)Partikel des Treibmittels an die Außenoberfläche der Granulatkörner anlagern können. Somit entsteht eine quantitative verbesserte und homogenere Verteilung/Anlagerung des Treibmittels an die Granulatkörner des eingesetzten Kunststoffgranulats während des Mischvorgangs im Schritt S 200. Bei Verwendung eines pastösen oder gar klebrigen Treibmittels kann dieser optionale Schritt S100 meist entfallen, da dann ausreichend Treibmittel zum Schäumen des Kunststoffs nach dem Mischen in Schritt S200 an den Außenflächen der Granulatkörner anhaften kann. Eine andere Möglichkeit das quantitative und qualitative Anhaften von Treibmittel an Oberflächen der Granulatkörner zu erhöhen, besteht darin, diese Oberflächen zu benetzen, beispielsweise mit Wasser, einem Öl, einem Harz oder Klebstoff.

Die in Schritt S 200 erhaltene Materialmischung aus Kunststoffgranulat und Treibmittel, mit oder ohne Haftvermittler, wird anschließend in einem Schritt S 300 in einem Vorratsbehälter eines Pellet-FDM-3D-Druckers bereitgestellt. Ein solcher Vorratsbehälter kommt bei einem Pellet-FDM-3D-Druckers anstelle einer Haspel für Filamente -FDM-3-D-Drucker zum Einsatz. Ein solcher Vorratsbehälter kann beispielsweise ein trichterförmiger Vorratsbehälter sein, dessen untere Trichteröffnung in eine Fördereinrichtung mündet, mittels der gemäß einem nächsten Schritt S 400 die Materialmischung aus dem Vorratsbehälter zu einer beheizten Austrittsdüse des Pellet-FDM-3D-Druckers gefördert wird. Als geeignete Fördereinrichtung kommen beispielsweise ein Schneckenförderer oder andere geeignete, insbesondere kontinuierlich fördernde Fördereinrichtungen infrage. Für kleinkörnige Materialmischungen ist auch vorstellbar, dass bereits die Schwerkraft zur Förderung der Materialmischung zur beheizten Austrittsdüse ausreicht, beispielsweise bei relativ großdimensionierten Vorratsbehältern. Wie oben bereits ausgeführt, kann die Schwerkraft aber auch nur die Förderung durch den Extruder unterstützen, insbesondere wenn ein eingesetzter Schneckenförderer im Wesentlichen vertikal angeordnet ist.

Bevorzugt ist am Ausgang der Fördereinrichtung eine beheizte Austrittsdüse für den Pellet-FDM-3D-Drucker vorgesehen sein, die einen beheizten Düsenkanal aufweist, welcher in der Lage ist, die durch den Düsenkanal hindurchtretende Kunststoffmaterialmischung wenigstens unterstützend in einem Schritt S 450 weiter zu erhitzen oder eine bereits vorliegende Schmelze der Materialmischung warm zu halten bzw. diese Materialmischung im Schritt S 450 über die Schmelztemperatur des thermoplastischen Kunststoff weiter zu erhitzen. In einem anschließenden Schritt S 500 wird die Materialmischung durch eine solche beheizte Austrittsdüse hindurchgedrückt, bevorzugt mittels der Fördereinrichtung. Dabei entsteht aus der Materialmischung durch Erhitzen über die Schmelztemperatur des thermoplastischen Kunststoffs in der Fördereinrichtung und/oder im Bereich des Düsenkanals der Austrittsdüse ein aufgeschmolzener, faden-oder bandförmiger warmer und weicher Extrudatstrang 2, der unter Druck steht und nach Verlassen der Austrittsdüse expandieren kann, wobei dieser Expansionsdruck das Hindurchtreten durch die Austrittsdüse unterstützt. Nach Austritt aus der Austrittsdüse bildet sich durch die "freie" Expansion des Treibmittels im Extrudatstrang 2, das gasförmig die zuvor aufgeschmolzene Materialmischung im Förderkanal unter Druck setzt, eine poröse Oberfläche auf dem Extrudatstrang 2 aus, die für Schaumkunststoffe typisch ist.

Damit ein Aufschäumen schon vor Austritt aus der beheizten Austrittsdüse wenigstens initiiert, bevorzugt aber erfolgt, wird die Austrittsdüse und/oder deren Düsenkanal zum Beispiel derart (unterstützend) erwärmt, sodass nicht nur die Aktivierungstemperatur des Treibmittels, sondern auch die Schmelztemperatur des thermoplastischen Kunststoffs der Materialmischung erreicht und überschritten wird. Die Fördereinrichtung, zum Beispiel ein Schneckenförderer, kann bevorzugt einen wesentlichen, insbesondere einen überwiegenden Teil des Wärmeeintrags in die Materialmischung, der zum Aufschäumen der Schmelze und/oder zum Aktivieren des Treibmittels notwendig ist, bereitstellen. Zu diesem Zweck ist es bevorzugt, dass die Aktivierungstemperatur des Treibmittels niedriger ist als die Schmelztemperatur des thermoplastischen Kunststoffmaterials. Hierdurch kann sichergestellt werden, dass bei einem Aufschmelzen des thermoplastischen Kunststoffmaterials in jedem Fall auch die Aktivierungstemperatur des Treibmittels erreicht ist, und so zuverlässig ein Aufschäumen der Materialmischung spätestens am Düsenausgang stattfinden kann.

In einem weiteren Schritt S 600 findet beim erfindungsgemäßen Verfahren ein wiederholtes, schichtbildendes Auftragen und/oder Ablegen der Extrudatstränge 2 in Schmelzbahnen7 in Schwerkraftrichtung auf ein getaktet angetriebenes Förderband statt. Alternativ kann das Ablegen des Extrudatstranges 2 auch auf einen bereits in einem vorherigen Durchgang aufgetragenen Extrudatstrang 2 erfolgen, wobei letzterer, in Schwerkraftrichtung gesehen, dabei wenigstens teilweise von dem frisch abgelegten, d.h. dem nachfolgenden noch warmen und weichen Extrudatstrang 2 überlappt wird. Nach dem Auftragen einer Schicht 3 aus einem oder mehreren Extrudatsträngen 2 wird das Förderband, insbesondere ein endlos Förderband, um einen Schritt weiter getaktet, sodass die nächste Schicht 3 aufgetragen werden kann. Erfindungsgemäß verfährt der Druckkopf/die Materialauftragvorrichtung dabei nur in Sohlenquerrichtung (Y-Richtung) und Sohlendickenrichtung (Z-Richtung). Die Sohlenlängsrichtung (X-Richtung) wird durch das getaktet angetriebene Förderband bewerkstelligt. D.h. die einzelnen Schichten 3 werden durch die Materialauftragvorrichtung/den Druckkopf gebildet, wobei die Aneinanderreihung der Schichten 3 in Sohlenlängsrichtung (X-Richtung) durch das Fortbewegen des Förderbandes erfolgt.

In einer bevorzugten Ausführungsform des erfindungsgemäßen Verfahrens ist das getaktet angetriebene Förderband um einen Winkel **α** zur Horizontalen geneigt angeordnet. Bei einer getakteten Weiterbewegung des Förderbandes zum Zwecke der Bildung der nächsten Schicht 3 ist somit auch eine Bewegungskomponente in Z-Richtung (=Hochrichtung = Schwerkraftrichtung) relativ zum Druckkopf gegeben und es wird so vertikal mehr Platz für die Ablage der nächsten Schicht 3 freigegeben. Mit einer solchen geneigten Anordnung wird einerseits erreicht, dass eine nachfolgende Schicht 3 auf der darunterliegenden Schicht 3 bzw. ein Extrudatstrang 2 einer nachfolgenden Schicht 3 auf einen Extrudatstrang 2 der darunterliegenden Schicht 3 zu liegen kommt. Andererseits wird auch erreicht, dass wenigstens in einem Teilbereich jeder Schicht 3, die mit dem Förderband in Kontakt steht, eine Anhaftung an eine zuvor gebildete Schicht 3 erfährt. Der Druckkopf selbst muss hierbei im einfachsten Fall weiterhin lediglich zweidimensionale Bewegungen in der horizontalen X-Y Ebene durchführen. Die Bewegung in Z-Richtung (vertikale Richtung) des in 3-Dimensionen zu druckenden Einlegeteil wird weiterhin durch das schräggestellte, getaktet angetriebene Förderband übernommen. Als geeignete Anstellwinkel für das Förderband zur Horizontalen hat sich ein Bereich von 30° bis 70°, insbesondere ein Bereich von 40° bis 60° bewährt. Ein Anstellwinkel von 45° zur Horizontalen ist beispielsweise bevorzugt.

In einem weiteren optionalen Schritt S 650 kann während des 3D-Druckvorganges die Dicke/der Durchmesser des Extrudatstranges 2 durch bevorzugt stufenloses Variieren des Durchmessers der Austrittsdüse, verändert werden. Der Durchmesser der Austrittsdüse ist dabei stufenlos variierbar, beispielsweise in einem Bereich zwischen 1 mm und 10 mm. Abweichende Dicken sind jedoch ebenfalls vorstellbar, sodass der zuvor genannte Dickenbereich bzw. Durchmesserbereich rein beispielhafter Natur ist. Die Fachperson erkennt hier, dass weder die Werteangaben noch die runde Ausführungsform der Extrudatstränge den Erfindungsgedanken einschränken und auch dünnere, dickere oder andere Querschnitte für die Extrudatstränge zur Anwendung kommen können.

Die Variation der Dicke und/oder der Querschnittsform der Extrudatstränge 2 während des 3D-Druckens gelingt zum Beispiel durch die Verwendung einer Irisblende, die in ihrer Düsen-/Blenden-Austrittsöffnung variabel einstellbar ist. Dabei kann die Irisblende, wie auch jede andere Blende in oder nach der Austrittsdüse angeordnet sein. Mit dieser Maßnahme der Verwendung einer solchen verstellbaren Blende können beispielsweise in verdickten Bereichen, d.h. in Bereichen mit höherer Wandstärke des herzustellenden Einlegeteils 1 die Anzahl der hin und her Bewegungen des Druckkopfes durch die Ablage eines verdickten / dickeren Extrudatstranges 2 aus aufgeschäumtem Material minimiert werden, anstelle viele dünne Extrudatstränge 2 / Schichten 3 nebeneinander zu legen. Damit gelingt es, je nach Wandstärke des herzustellenden Einlegeteils 1 eine dickwandigere Sektion mit gegebenenfalls nur jeweils einem Strang 2 größerer Dicke pro Druckebene/-schicht 3 zu realisieren. Dies verringert die 3D-Druckzeit und erhöht die Wirtschaftlichkeit des 3D-Druckvorganges.

Im Vergleich zum Stand der Technik ist dies bei dem erfindungsgemäß verwendete Verfahren zum 3D-Drucken mit Extrudatsträngen aus aufgeschäumten Kunststoffmaterial relativ leicht zu realisieren. Somit ist das erfindungsgemäße 3D-Druckverfahren auch nicht auf die standardisierten Kunststoff-Filament-Durchmesser, die am Markt verfügbar sind (1,75 mm und 2,85 mm (3mm), eingeschränkt. Es können erfindungsgemäß sowohl dünnere als auch dickere Extrudatstränge 2 sowie sämtliche Zwischengrößen davon mit dem erfindungsgemäßen 3D-Druckverfahren realisiert werden, und dies variabel auch während eines Druckvorganges.

Mit dem erfindungsgemäßen Verfahren bei Einsatz einer Blende mit variabel einstellbaren Blendenquerschnitten können somit orthopädisch wirksame Bauteile hergestellt werden, die durch Extrudatstränge 2 mit verschiedenen Dicken/Querschnittsformen aufgebaut sind. So können beispielsweise flächige Bereiche des Einlegeteils 1 mit Extrudatsträngen 2 mit größerem Durchmesser gefertigt werden und Bereiche, in denen es auf eine gute Maßhaltigkeit in der Nachbildung der 3D-Ausgangsdaten ankommt, mit Extrudatsträngen 2 gefertigt werden, die einen kleinere Querschnitte/Durchmesser zeigen.

Das erfindungsgemäße Verfahren zum Herstellen eines Einlegeteils 1 ist beispielhaft in Figur 10 schematisch dargestellt. In einem ersten, vorgezogenen Herstellschritt des erfindungsgemäßen Verfahren wird ein solches, erfindungsgemäßes, orthopädisch wirksames Einlegeteil 1 aus Extrudatsträngen 3D-gedruckt, die aus aufgeschäumten, thermoplastischen KunststoffMaterial bestehenden. Diese so vorgefertigten, erfindungsgemäß 3D-gedruckten Einlegeteile 1 werden dann zum Komplettieren eines erfindungsgemäßen Schuheinlagenrohlings 10 bzw. einer erfindungsgemäßen Schuheinlage 10 in einem ersten Herstellschritt für RIM-PUR-Schuheinlagen 10 A) in eine geöffnete RIM-Ausschäumform eingelegt, wobei sich hierbei die Schäumformhälfte oder das Formnest anbietet, in das im nächsten Schritt B) die Polyol / Isocyanat - Mischung mittels eines Mischkopfes eingebracht wird. Dieses Einbringen der Polyol / Isocyanat - Mischung in Schritt B) erfolgt dabei bevorzugt direkt auf das zuvor eingelegte Einlegeteil 1, sodass das Einlegeteils 1 später an der Unterseite 4 der Schuheinlage 10 angeordnet und sichtbar ist. Ist das Einlegeteil 1 derart ausgebildet, wie etwa in Figur 1 dargestellt, also als Fersen-stützendes, orthopädisch wirksames Bauteil, so ist dies bevorzugt so dimensioniert, dass auch die äußeren Seitenflächen des Einlegeteils 1 an den entsprechenden Seitenflächen des Formnestes in der Schäumform zumindest teilweise anliegen und so der expandierende PUR-Schaumkunststoff im Wesentlichen nur die Oberseite 5 des Einlegeteils 1 benetzen kann.

In einer anderen Ausführungsform liegt das Einlegeteil 1 nur teilweise, bspw. über seitliche Stege an der Schäumform an, damit seine Lage in der Schäumform fixiert ist, und so, dass RIM-PUR-Schaumkunststoff an die nicht anliegenden Seitenflächen expandieren kann. Damit wird eine verbesserte Verbindung in den Seitenbereichen zwischen Einlegeteil 1 und Polsterkörper 20 erreicht. Dabei ist die Steghöhe nur so hoch, dass kein RIM-PUR-Schaumkunststoff zwischen dem Einlegeteil 1 und der Wandung des Formnestes eindringen kann.

Damit die in die offene Schäumform eingebrachte Polyol / Isocyanat - Mischung nicht unkontrolliert zu PUR-Schaumkunststoff expandiert, wird kurz nach Einbringen der Polyol / Isocyanat - Mischung die Schäumform in einem Schritt C) geschlossen, sodass sich eine geschlossene Kavität bildet, die ein Negativabbild der fertigen Schuheinlage10 darstellt. In dieser geschlossenen Kavität, in dem sich auch das Einlegeteils 1 befindet, kann die eingebrachte Polyol / Isocyanat - Mischung im Schritt D) zu RIM-PUR-Schaumkunststoff ausreagieren und zum Polsterkörper 20 aufschäumen und expandieren, wobei der RIM-PUR-Schaumkunststoff durch den Überdruck in der Schäumform den entstehenden PUR-Schaumkunststoff in alle Richtung zur Expansion zwingt - bei der Reaktion von Polyol mit Isocyanat entsteht bei Anwesenheit von Wasser, gasförmiges Kohlendioxid, das nicht nur das entstehende PUR aufschäumt, sondern auch den Druck in der Schäumform erhöht. Die in der Kavität beim Schließen der Schäumform eingeschlossene Luft entweicht bevorzugt über die Trennebene(n) der Schäumform. Hierbei können die Stufen 7 und Rillen 8 des Einlegeteils 1 unterstützend wirken, da diese gegenüber dem Formnest der Schäumform kleine Entlüftungskanäle ausbilden können, die von der Luft, aber nicht vom PUR-Schaumkunststoff durchströmbar/passierbar sind.

Nachdem der RIM-PUR-Schaumkunststoff die Kavität der Schäumform vollständig ausgeschäumt hat und der sich dabei gebildete Polsterkörper 20 mit dem Einlegeteils 1 verbunden hat, kann, nachdem der RIM-PUR-Schaumkunststoff ausgehärtet ist, in einem Schritt E) die Schäumform geöffnet werden und der Schuheinlagenrohling 10 /die Schuheinlage 10 mit dem an den RIM-PUR-Schaumkunststoff-Polsterkörper 20 angeschäumten und damit verbundenem Einlegeteil 1 entnommen werden.

Wie zuvor bereits aufgezeigt, können die einzelnen Ausführungsbeispiele der Figuren 1 bis 9 miteinander kombiniert werden, ohne vom Erfindungsgedanken abzuweichen. Erfindungsgemäß sind insbesondere Schuheinlegesohlenrohlinge 10 herstellbar, die einen oder mehrere Einlegeteile 2, an die der Polsterkörper 20 angeschäumt ist, aufweisen. Dabei ist das Einlegeteil 1 in einem Pellet-3D-Druckverfahren gefertigt und kann eine oder mehrere Ausnehmungen 16 aufweisen, in die der PUR-Schaumkunststoff des Polsterkörpers 20 eindringen kann. Die Schichten 3 der im Pellet-3D-Druckverfahren abgelegten Extrudatstränge 2 sind in der bestimmungsgemäßen Ausrichtung des Einlegeteils 1 in der Schuheinlage 10 vertikal und/oder stufenartig, geneigt zur Horizontalen angeordnet, wobei die nach außen weisenden Extrudatstränge eine raue, poröse Oberfläche zeigen und das Einlegeteil 1 gerippte wellenförmige Außenflächen zeigt. Der RIM-PUR-Polsterkörper 20 kann gleichzeitig während seines RIM-Aufschäumens aus RIM-PUR-Schaumkunststoff oberseitig als auch unterseitig mit einem Bezug 30, 40 versehen werden. Die Fachperson erkennt hier eine Vielzahl möglicher Kombinationen aus Einlegeteilen 1, Polsterkörpern 20 und Bezügen 30, 40, die alle durch den Erfindungsgedanken eine Schuheinlage 10 mit einem erfindungsgemäß 3D-gedruckten Einlegeteil 1 bereitzustellen, miteinander verbunden sind.

### Bezugszeichenliste

- 1: Einlegeteil
- 2: Extrudatstrang /Extrudatstränge
- 3: Schicht
- 4: Unterseite Einlegeteil
- 5: Oberseite Einlegeteil
- 6: Seitenfläche /Rand Einlegeteil
- 7: Schmelzbahn / Streifen
- 8: Rille
- 9: Poren
- 10: Schuheinlagenrohling / Schuheinlage
- 11: Vorderfußbereich
- 12: Mittelfußbereich
- 13: Fersenbereich
- 14: Unterseite Schuheinlage
- 15: Oberseite Schuheinlage
- 16: Ausnehmung/Aussparung

- 20: Polsterkörper

- 30: Bezug Oberseite Schuheinlage
- 32: Ausnehmung Bezug

- 40: Bezug Unterseite Schuheinlage

- **α**: Winkel zur Horizontalen / Unterseite Einlegeteil
- X: Längsrichtung Einlegeteil/Schuheinlage
- Y: Querrichtung Einlegeteil/Schuheinlage
- Z: Dickenrichtung Einlegeteil/Schuheinlage / Schwerkraftrichtung

## Patentansprüche

1. Orthopädische RIM-PUR-Schuheinlage (10) mit einem fußstützenden Einlegeteil (1), das mit im FDM-3D-Druckverfahren erzeugten Extrudatsträngen (2) ausgebildet wurde, die im Einlegeteil (1) in parallelen Schmelzbahnen (7) nebeneinander und/oder in Schichten (3) übereinander angeordnet sind, wodurch zumindest die Oberseite (5) und die Seitenflächen (6) des Einlegeteils (1) eine rippenartige Wellenstruktur zeigen, und wobei das Einlegeteil (1) in der Schuheinlage (10) während eines Ausbildens eines Polsterkörpers (20) der Schuheinlage (10) im RIM-Schäumverfahren von dem in einer RIM-Schäumform reaktiv erzeugtem RIM-PUR-Schaumkunststoff angeschäumt und zumindest formschlüssig an den Polsterkörper (20) angebunden wurde.
**dadurch gekennzeichnet, dass** die Extrudatstränge (2):
(i) in einem Pellet-FDM-3D-Druckverfahren erzeugt wurden,
(ii) aus einem aufgeschmolzen und aufgeschäumten/expandierten thermoplastischen Kunststoff-Material bestehen, und
(iii) eine poröse Oberflächenstruktur aufweisen.

2. Schuheinlage (10) nach Anspruch 1, bei der das Einlegeteil (1) aus patienten-individuellen 3D-Daten im Pellet-FDM-3D-Druckverfahren erzeugt wurde.

3. Schuheinlage (10) nach einem der Ansprüche 1 oder 2, bei der das Einlegeteil (1) in einem Pellet-FDM-3D-Druckverfahren durch Aufschäumen mittels eines Treibmittels von einem oder mehreren thermoplastischen Kunstoffen, ausgewählt aus der Gruppe von: ABS, ASA, EVA, PA, PC, PE, PETG, PLA, PP, PS oder TPU, gebildet wurde.

4. Schuheinlage (10) nach einem der vorherigen Ansprüche, bei der der für das Einlegeteil (1) verwendete Kunststoff ein faserverstärkter, insbesondere ein mit Carbonfasern verstärkter Kunststoff ist.

5. Schuheinlage (10) nach einem der vorherigen Ansprüche, bei der das Einlegeteil (1) auch stoffschlüssig mit dem Polsterkörper (20) verbunden ist.

6. Schuheinlage (10) nach einem der vorherigen Ansprüche, bei der die aus den Extrudatsträngen (2) gebildeten Schichten (3) von Schmelzbahnen (7) im bestimmungsgemäßen Gebrauch der Schuheinlage (10) stufenartig und/oder in einem Winkel (**α**) zur Horizontalen angeordnet sind.

7. Schuheinlage (10) nach einem der vorherigen Ansprüche, bei der die Unterseite des Einlegeteils (1) im Wesentlichen eine Ebene bildet.

8. Schuheinlage (10) nach einem der vorherigen Ansprüche, bei der das Einlegeteil (1) an der einem Schuh zugewandten Unterseite (14) der Schuheinlage (10) angeordnet ist.

9. Schuheinlage (10) nach einem der vorherigen Ansprüche, bei der das Einlegeteil (1) im Fersenbereich (13), im Mittelfußbereich (12) und/oder im Vorderfußbereich (11) der Schuheinlage (10) angeordnet ist.

10. Schuheinlage (10) nach einem der vorherigen Ansprüche, bei der das Einlegeteil (1) und/oder der Polsterkörper (20) durch Schleifen und/oder Fräsen nachträglich bearbeitbar ist.

11. Schuheinlage (10) nach einem der vorherigen Ansprüche, bei der das Einlegeteil (1) im Fersenbereich (13) eine Ausnehmung (16) aufweist.

12. Schuheinlage (10) nach einem der vorherigen Ansprüche, bei der der Polsterkörper (20) auf der einem Fuß zugewandten Oberseite (15) der Schuheinlage (10) ein Fußbett zeigt.

13. Schuheinlage (10) nach einem der vorherigen Ansprüche, bei der die einem Fuß zugewandte Oberseite (15) der Schuheinlage (10) und/oder die einem Schuh zugewandte Unterseite des Polsterkörpers (20) und/oder die Unterseite (4) des Einlegeteils (1) mit einem Deckmaterial (30, 40) bezogen ist.

14. Verfahren zum Herstellen eines orthopädisch wirksamen Einlegeteils (1) für RIM-PUR-Schuheinlagen (10) aufweisend die Schritte:
| | |
|---|---|
| S 200 | physikalisches Mischen von Granulatkörnern eines thermoplastischen Kunststoff-Materials mit einem Treibmittel zum Erzeugen einer Materialmischung; |
| S 300 | Bereitstellen der Materialmischung in einem trichterförmigen Vorratsbehälter eines Pellet-FDM-3D-Druckers; |
| S 400 | Fördern der Materialmischung aus dem Vorratsbehälter zu einer Austrittsdüse des Pellet-FDM-3D-Druckers mittels einer Fördereinrichtung; |
| S 500 | Erhitzen der Materialmischung, gegebenenfalls bereits teilweise während des Förderns im vorangegangenen Schritt, bis über eine Schmelztemperatur des Kunststoffmaterials bei gleichzeitiger thermischer Aktivierung des Treibmittels; |
| S 600 | Durchdrücken der aufgeschmolzenen Materialmischung aus Kunststoffmaterial und aktiviertem Treibmittel durch die Austrittsdüse des Pellet-FDM-3D-Druckers zum Erzeugen eines aus der aufgeschmolzenen Materialmischung entstehenden, aufschäumend expandierenden, faden- oder bandförmigen Extrudatstranges (2) mit poröser Oberfläche und einem Querschnitt größer als der Querschnitt der Austrittsdüse; |
| S 700 | wiederholtes paralleles und schichtbildendes Auftragen und/oder Ablegen des noch warmen und weichen Extrudatstranges (2) aus aufgeschmolzen aufgeschäumten thermoplastischen Kunststoff in Schwerkraftrichtung mittels einer Materialauftragvorrichtung auf ein getaktet angetriebenes Förderband und/oder auf einen bereits auf dem Förderband befindlichen, aufgetragenen aufgeschäumt expandierten Extrudatstrang (2), diesen, in Schwerkraftrichtung gesehen, wenigstens teilweise überlappend, zum schritt- und/oder schichtweisen Ausbilden des Einlegeteils (1) mit einer zumindest auf der Oberseite (5) und den Seitenflächen (6) rippenartigen Wellenstruktur; |

15. Verfahren nach Anspruch 14, bei dem das Einlegeteil (1) am Ende der Förderstrecke des Förderbandes mittels Schwerkraft in einen Auffangbehälter fällt.

16. Verfahren nach Anspruch 14 oder 15, bei dem das Förderband um einen Winkel (α) gegenüber der Horizontalen geneigt ist.

17. Verfahren nach einem der Ansprüche 14 bis 16, bei dem das thermoplastische Kunststoff-Material für die Ausbildung des Einlegeteils (1) ein thermoplastisches Polyurethan, oder ein anderes thermoplastisches Material ist, das für die Herstellung von orthopädischen Schuheinlagen medizinisch zugelassen ist.

18. Verfahren nach einem der Ansprüche 14 bis 17, bei dem in einem vorgelagertem Schritt S100 die Oberflächen der Granulatkörner des thermoplastischen Kunststoffs vor dem Mischen mit dem Treibmittel in Schritt S200 aufgeraut und/oder vor oder während des Mischens in Schritt S200 mit einem Öl, Harz oder Klebstoff benetzt werden.

19. Verfahren nach einem der Ansprüche 14 bis 18, bei dem in einem Schritt S650 der Querschnitt der Austrittsdüse während des 3D-Druckvorgangs verändert werden kann.

20. Verfahren zum Herstellen einer orthopädischen RIM-PUR-Schuheinlage (10) mit einem Einlegeteil (1), das nach einem der Ansprüche 14 bis 19 hergestellt wurde, aufweisend die Schritte:
A) Einlegen des Einlegeteils (1) in eine geöffnete RIM-Ausschäumform;
B) Einbringen einer vorbestimmten Menge eines Polyols und eines Isocyanats mittels eines Mischkopfes in die geöffnete RIM-Ausschäumform zum Erzeugen eines Polsterkörpers (20) aus RIM-PUR-Schaumkunststoff;
C) Bilden einer Kavität durch Schließen der RIM-Ausschäumform;
D) Expanieren- und Aushärtenlassen des entstehenden Polsterkörpers (20) aus RIM-PUR-Schaumkunststoffs in der Kavität;
E) Öffnen der Kavität und Entnehmen des Schuheinlagenrohlings (10) mit dem an den PUR-Schaumkunststoff-Polsterkörper (20) angeschäumt angebundenen Einlegeteil (1).
